(19) Europäisches Patentamt / European Patent Office / Office européen des brevets

(11) **EP 1 845 796 B1**

(12) **FASCICULE DE BREVET EUROPEEN**

(45) Date de publication et mention de la délivrance du brevet:
**09.03.2011 Bulletin 2011/10**

(21) Numéro de dépôt: **06709233.8**

(22) Date de dépôt: **02.02.2006**

(51) Int Cl.:
*A23C 9/123* (2006.01)   *A23C 9/12* (2006.01)

(86) Numéro de dépôt international:
**PCT/FR2006/000241**

(87) Numéro de publication internationale:
**WO 2006/084976 (17.08.2006 Gazette 2006/33)**

(54) **PROCEDE DE FABRICATION EN CONTINU DE YOGHOURTS ET LAITS FERMENTES BRASSES OU A BOIRE, ET DISPOSITIF ADAPTE A LA MISE EN OEVRE DE CE PROCEDE**

VERFAHREN FÜR DIE KONTINUIERLICHE HERSTELLUNG VON LÖFFELBAREN JOGHURTS UND LÖFFELBARER FERMENTIERTER MILCH, BZW. TRINKBAREN JOGHURTS UND TRINKBARER FERMENTIERTER MILCH, UND GERÄT ZUR DURCHFÜHRUNG DES VERFAHRENS

METHOD FOR THE CONTINUOUS PRODUCTION OF SPUN YOGHURTS AND FERMENTED MILK OR YOGHURTS AND FERMENTED MILK TO BE DRUNK, AND DEVICE FOR IMPLEMENTING SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.02.2005 FR 0501349**

(43) Date de publication de la demande:
**24.10.2007 Bulletin 2007/43**

(73) Titulaire: **Compagnie Gervais Danone**
**75009 Paris (FR)**

(72) Inventeurs:
• **SOUARD, Xavier**
  **F-91470 Limours (FR)**
• **ALEONARD, Séverine**
  **F-78330 Fontenay le Fleury (FR)**
• **BOULAT, Céline**
  **F-91530 Saint Cheron (FR)**
• **FAURIE, Jean-Michel**
  **F-78350 Jouy en Josas (FR)**
• **MARCHAL, Laurent**
  **F-91360 Villemoisson-sur-Orge (FR)**

(74) Mandataire: **Cabinet Plasseraud**
  **52, rue de la Victoire**
  **75440 Paris Cedex 09 (FR)**

(56) Documents cités:
  DE-A1- 2 317 452    GB-A- 1 310 296
  US-A- 5 962 046

• LELIEVELD H L M: "CONTINUOUS FERMENTATION IN YOGHURT MANUFACTURE" PROCESS BIOCHEMISTRY, vol. 11, no. 5, juin 1976 (1976-06), pages 39-40, XP002031924
• KLAVER F A M ET AL: "INTERACTIVE FERMENTATION OF MILK BY MEANS OF A MEMBRANE DIALYSIS FERMENTER: YOGHURT*" NETHERLANDS MILK AND DAIRY JOURNAL, PUDOC. WAGENINGEN, NL, vol. 46, no. 1, janvier 1992 (1992-01), pages 31-44, XP000250071 ISSN: 0028-209X
• LOO VAN DER L G W: "KONTINUIERLICHE ZUBEREITUNG VON RUEHRJOGHURT IN INDUSTRIELLEM AUSMASS" DEUTSCHE MILCHWIRTSCHAFT, HILDESHEIM, DE, vol. 29, 1980, pages 1199-1202, XP000646537 ISSN: 0012-0480
• DRIESSEN F M ET AL: "CONTINUOUS MANUFACTURE OF YOGURT. II. PROCEDURE AND APPARATUS FOR CONTINUOUS COAGULATION" BIOTECHNOLOGY AND BIOENGINEERING, INTERSCIENCE PUBLISHERS, LONDON, GB, vol. XIX, 1977, pages 841-851, XP002031925 ISSN: 0006-3592

EP 1 845 796 B1

**Description**

**DOMAINE DE L'INVENTION**

La présente invention est relative à un procédé pour la fabrication d'un produit laitier fermenté choisi parmi le groupe constitué par les yoghourts brassés, les yaourts à boire, les laits fermentés brassés, et les laits fermentés à boire. Le procédé selon l'invention est spécialement adapté à un fonctionnement en continu.

La présente invention est également relative à un dispositif spécialement adapté à la mise en oeuvre du procédé selon l'invention.

**RÉSUMÉ DE L'INVENTION**

La présente invention fournit des moyens adaptés à la fabrication en continu d'un produit laitier fermenté choisi parmi le groupe constitué par les yoghourts brassés, les yoghourts à boire, les laits fermentés brassés, et les laits fermentés à boire.

Le procédé selon l'invention comprend la fermentation d'un substrat laitier par au moins une souche de *Lactobacillus delbrueckii* ssp. *bulgaricus* et par au moins une souche de *Streptococcus salivarius* ssp. *thermophilus.*

Cette fermentation s'étage en une pré-fermentation jusqu'à obtention d'un pH compris entre 5,6 et 5,9 (bornes incluses), et en une fermentation dite post-acidifiante qui est menée jusqu'à coagulation (pH compris entre 4 et 5, bornes incluses).

Lesdites au moins deux souches sont cultivées chacune séparément dans des dispositifs distincts de pré-fermentation, sans mélange de l'une de ces souches avec l'autre. Il existe donc au moins deux dispositifs de pré-fermentation (dispositifs référencés sous pFi $_{i:1 \to n, \, n \geq 2}$), à savoir au moins un dispositif de pré-fermentation pour l'obtention de culture de pré-fermentation de ladite au moins une souche de *L. bulgaricus,* et au moins un dispositif (distinct) de pré-fermentation pour l'obtention de culture de pré-fermentation de ladite au moins une souche de *S. thermophilus.*

Chacun de ces dispositifs de pré-fermentation pFi fonctionne en continu avec prélèvement de milieu pré-fermenté en flux de sortie, et ré-alimentation en substrat non fermenté en flux d'entrée, de sorte à maintenir un pH compris entre 5,6 et 5,9 (bornes incluses) dans chacune de ces cultures de pré-fermentation.

Le flux de sortie de chacun de ces dispositifs de pré-fermentation est dirigé vers un ou plusieurs dispositif(s) Fc$_j$ de coagulation, de sorte que chacun de ces dispositif(s) Fc$_j$ de coagulation reçoit un volume du flux de sortie prélevé dudit au moins un dispositif de pré-fermentation *L. bulgaricus,* ainsi qu'un volume du flux de sortie prélevé dudit au moins un dispositif de pré-fermentation *S. thermophilus.*

Conformément au procédé selon l'invention, chaque dispositif(s) Fc$_j$ de coagulation reçoit en outre par ailleurs un volume de substrat laitier ayant subi un traitement thermique au moins équivalent à la pasteurisation. Ce volume de substrat laitier est distinct des volumes de flux reçus en provenance des dispositifs pFi de pré-fermentation.

Conformément au procédé selon l'invention, il n'y a pas de mise en refroidissement entre la sortie des dispositifs pFi de pré-fermentation et l'arrivée à(aux) dispositif(s) de coagulation Fc$_j$.

La présente invention propose en outre un dispositif spécialement adapté à la mise en oeuvre du procédé selon l'invention. Le dispositif selon l'invention comprend notamment :

- au moins un dispositif de coagulation Fc$_j$ pourvu d'au moins une entrée,
- au moins deux dispositifs de pré-fermentation pFi $_{i:1 \to n, \, n \geq 2}$, chacun pourvu d'au moins une entrée et d'au moins une sortie,
- des moyens d'alimentation et de prélèvement en continu desdits dispositifs pFi de pré-fermentation,
- des moyens de guidage adaptés à diriger le milieu pré-fermenté prélevé de chacun desdits dispositifs de pré-fermentation vers le dispositif Fc$_j$ de coagulation, ou, le cas échéant, des moyens adaptés à diriger et distribuer le milieu pré-fermenté prélevé de chacun desdits dispositifs de pré-fermentation dans chacun des dispositifs Fc$_j$ de coagulation de sorte que chacun de ces dispositifs Fc$_j$ de coagulation puisse ainsi recevoir un volume du milieu pré-fermenté prélevé de chacun desdits au moins deux dispositifs de pré-fermentation pFi $_{i:1 \to n, n \geq 2}$, et en outre
- des moyens d'alimentation de coagulateur permettant d'alimenter en substrat laitier ce(s) même(s) dispositif(s) Fc$_j$ de coagulation,
ledit dispositif ne comprenant pas de moyens de mise en refroidissement qui permettraient de mettre en refroidissement le milieu pré-fermenté qui est prélevé de chacun desdits dispositifs de pré-fermentation, et dirigé et/ou distribué jusqu'audit(auxdits) même(s) dispositif(s) Fc$_j$ de coagulation.

Par rapport aux moyens de fabrication en continu de yoghourts et laits fermentés décrits dans l'art antérieur, la présente invention présente l'avantage de permettre un contrôle fin des biomasses produites en pré-fermentation : ils permettent de mieux maîtriser la croissance et surtout l'état physiologique des populations bactériennes qui interviennent dans la fabrication de yoghourts et laits fermentés.

Par rapport à la fermentation classique qui est menée en un seul et même dispositif de la pré-fermentation à la post-acidification, les moyens selon l'invention permettent en outre de réduire considérablement (d'environ 50%) le temps d'occupation des dispositifs de coagulation.

**ARRIÈRE-PLAN TECHNOLOGIQUE**

Conformément aux dispositions du Décret français n°88-1203 du 30 décembre 1988 et à celles du Codex Alimentarius norme n°A-11(a) (1975), les yoghourts et laits fermentés résultent de la fermentation d'un substrat laitier par au moins deux bactéries lactiques thermophiles : *Streptococcus salivarius* subsp. *thermophilus* et *Lactobacillus delbrueckii* subsp. *bulgaricus.*

Ces bactéries consomment le lactose du lait et produisent de l'acide lactique. Elles ont pour rôle principal d'abaisser le pH du lait au point isoélectrique de la caséine (pH 4,6) de façon à former un gel (ou coagulum). Elles assurent aussi la production de composés aromatiques et la production de polysaccharides qui donnent la consistance du gel.

Les bactéries de l'espèce *L. bulgaricus* et celles de l'espèce S. *thermophilus* sont microaérophiles et vivent en symbiose dans le yaourt : elles produisent davantage d'acide lactique cultivées ensemble que séparément.

L'acidification résultant du métabolisme de ces bactéries provoque la coagulation des caséines et la prise en masse du lait. Le coagulum est ferme, sans exsudation de lactosérum (c'est-à-dire sans phénomène de synérèse). Les bactéries *L. bulgaricus* et S. *thermophilus* se retrouvent vivantes dans le produit fini. Les yoghourts et laits fermentés se différencient des fromages frais (qui sont également obtenus par coagulation lactique) par l'absence d'égouttage du gel.

A la suite de cette fermentation coagulante, la production de yoghourts et laits fermentés brassés ou à boire implique en outre la mise en oeuvre d'un décaillage et d'un brassage.

Pour la production de laits fermentés et de yoghourts, la fermentation du substrat laitier est classiquement pratiquée en mode discontinu (mode « batch ») au sein d'une même cuve : les souches de *L. bulgaricus* et de *S. thermophilus* sont ensemencées dans un substrat laitier maintenu à une température convenant au métabolisme de chacune des souches ensemencées, et la fermentation est poursuivie au sein de cette cuve jusqu'à atteinte du pH cible entre 4 et 5 et formation du coagulum.

Des moyens adaptés à la fabrication en continu de yoghourts et laits fermentés ont ensuite été développés dans l'art antérieur.

Ces moyens de l'art antérieur ont dû distinguer deux stades dans le processus de fermentation lactique acidifiante :

- un premier stade dit de pré-fermentation où l'acidification du substrat laitier ensemencé a commencé, mais où le pH reste supérieur à 5 de sorte à éviter l'apparition d'une synérèse complète, et
- un deuxième stade, où le pré-ferment obtenu au premier stade est utilisé de sorte à poursuivre la fermentation en post-acidifiant jusqu'au pH cible de coagulation (pH compris entre 4 et 5).

Ainsi, le brevet US 3 946 657 aux noms de Driessen *et al.* ainsi que le brevet US 5 962 046 aux noms de Eyer *et al.* divulguent des moyens permettant la fabrication de yoghourts en continu.

Selon ces moyens de l'art antérieur, les souches bactériennes sont pré-fermentées ensemble dans une même cuve de pré-fermentation, le pré-ferment ainsi obtenu étant alors versé dans une cuve de coagulation afin de poursuivre la fermentation jusqu'à coagulation.

En outre, ces moyens de l'art antérieur prévoit des moyens de mise en refroidissement entre la sortie de la cuve de pré-fermentation et l'arrivée à la cuve de coagulation : le brevet US 3 946 657 préconise l'utilisation d'un *« cooler* 10 »* pour refroidir le pré-ferment à 33-37°C ; et le brevet US 5 962 046 préconise quant à lui de refroidir le pré-ferment à moins de 15°C à l'aide de réfrigérateurs « 3 » et « 4 » et de fermenteurs réfrigérés «F2». Les documents XP 002031924 et XP 000250071 divulguent des procédés de fabrication en continu de yaourt.

La présente invention propose quant à elle des moyens qui sont adaptés à la production en continu de laits fermentés et yoghourts brassés et à boire. Ils comprennent notamment la mise en oeuvre de pré-fermentations séparées des souches lactiques, l'utilisation de ces pré-fermentations en mode continu, l'apport de ces pré-ferments à un substrat laitier sans mise en refroidissement, la fermentation de l'ensemble jusqu'à coagulation, et le brassage du coagulum obtenu.

Les moyens selon l'invention permettent de mieux maîtriser la croissance et surtout l'état physiologique des populations bactériennes qui interviennent dans la fabrication de yoghourts et laits fermentés. Cette meilleure maîtrise permet non seulement d'optimiser les capacités métaboliques des souches utilisées, et d'assurer une plus fidèle reproductibilité des processus mis en oeuvre, mais aussi de garantir un contrôle et une maîtrise plus fins des produits développés et de la biomasse. Les moyens selon l'invention représentent donc un avantage non seulement en termes de productivité mais aussi en termes de contrôle de la biomasse.

Les moyens selon l'invention présente par ailleurs l'avantage de réduire considérablement les temps d'occupation des cuves de coagulation.

## DESCRIPTION DÉTAILLÉE

La présente demande est relative à l'utilisation d'au moins deux cultures distinctes de pré-fermentation, l'une de *Lactobacillus delbrueckii* ssp. *bulgaricus* et l'autre de *Streptococcus salivarius* ssp. *thermophilus,* pour la fabrication d'un produit laitier fermenté choisi parmi le groupe constitué par les yoghourts brassés, les yoghourts à boire, les laits fermentés brassés et les laits fermentés à boire.

Chacune desdites au moins deux cultures est de préférence menée sur un substrat laitier non fermenté ayant subi un traitement thermique au moins équivalent à la pasteurisation, et plus préférablement sur un substrat laitier non fermenté qui a subi une stérilisation. Lesdites au moins deux cultures peuvent être utilisées en fonctionnement continu avec prélèvement continu d'un volume de chacune de ces cultures, ce volume prélevé étant non nul mais inférieur au volume total de la culture de laquelle il est prélevé, et avec ré-alimentation en continu d'un volume sensiblement identique de substrat laitier non-fermenté ayant subi un traitement thermique au moins équivalent à la pasteurisation. Le substrat laitier non fermenté venant ré-alimenter en continu ces cultures sera alors préférentiellement un substrat laitier stérilisé.

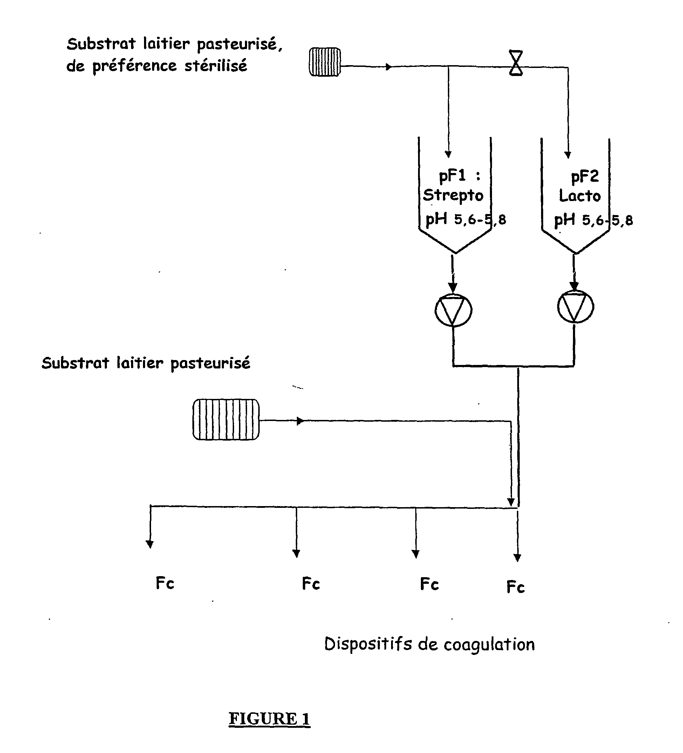

La figure 1 ci-jointe donne une représentation schématique d'un procédé et d'un dispositif selon l'invention. Un tel dispositif peut comprendre plus de deux pré-fermenteurs pFi.

La figure 2 présente un exemple de mode de réalisation particulier du procédé et du dispositif selon l'invention.

Dans la présente demande, il est donné aux termes « yoghourts » et « laits fermentés » leurs significations usuelles conformément à la norme n°A-11(a) (1975) du Codex Alimentarius.

Plus particulièrement, ces appellations correspondent à celles définies en France par le Décret n° 88-1203 du 30 décembre 1988 (publié au Journal Officiel de la République Française du 31 décembre 1988), dont le texte est reproduit ci-après.

Brièvement, lorsque le mélange laitier est inoculé avec un ferment composé de souches de *Lactobacillus bulgaricus* et *de Streptococcus thermophilus,* le produit est un yoghourt. Lorsque le mélange laitier est, en outre des souches précédentes, ensemencé avec d'autres espèces de bactéries lactiques notamment *Bifidobacterium, Lactobacillus acidophilus, Lactobacillus casei* ou encore *Lactobacillus helveticus,* le produit fini est un lait fermenté.

Il convient également de bien noter que, pour répondre aux termes de yoghourts et laits fermentés :

- la coagulation du substrat laitier ne doit pas être obtenue par des moyens autres que ceux qui résultent de l'activité des microorganismes utilisés,
- ces microorganismes doivent être retrouvés vivants dans le produit fini, et
- il ne doit pas y avoir égouttage du coagulum.

Le terme de substrat laitier est ici entendu dans sa signification usuelle pour la fabrication de produits laitiers fermentés de type yoghourts et laits fermentés, c'est-à-dire tout type de substrat dont la composition est adaptée à la mise en oeuvre d'une fermentation lactique en vue de la fabrication de yoghourts et laits fermentés adaptés à la consommation humaine.

Généralement, un tel substrat laitier présentera un pH compris entre 6 et 7 (bornes incluses) avant fermentation.

Dans la mesure où il est destiné à la production de yoghourts ou de laits fermentés, on choisira de préférence un substrat laitier qui présente une teneur en protéines différente de zéro, mais inférieure ou égale à 6%. Plus préférentiellement, on choisira un substrat laitier dont la teneur en protéines est comprise entre 3 et 5% bornes incluses, plus préférentiellement entre 3,4 et 5%, encore plus préférentiellement entre 3,6 et 4,8%. Une méthode conventionnelle pour mesurer la teneur en protéines d'un substrat laitier consiste à mesurer la teneur en azote total, et à retrancher la teneur en azote non protéique en mettant en oeuvre la méthode de Kjeldahl décrite dans « Science du lait - Principes des techniques laitières », quatrième édition, 1984, par C. Alais (Ed. SEPAIC), pages 195-196.

Généralement, le substrat laitier utilisé correspond en fait à du lait tel que collecté (par exemple du lait de vache, de brebis, de chèvre) qui, éventuellement, a été pré-pasteurisé (par exemple à 75°C pendant 10 à 30 secondes) et/ou écrémé. Le plus généralement, et notamment dans l'industrie, la composition du lait est en outre « standardisée » par ajout de produits dérivés du lait tels que poudre de lait écrémé, et/ou poudres de protéines laitières (caséinates ou WPC), et/ou matières grasses (crème, par exemple). Les substrats laitiers visés pour la présente invention ont donc en fait le plus généralement une composition qui correspond soit à celle du lait tel que collecté, soit à celle du lait standardisé, et ont pu être pré-pasteurisés et/ou écrémés.

Par pasteurisation et stérilisation, on entend des traitements thermiques visant à détruire les microorganismes pathogènes contenus ou susceptibles d'être contenus dans un substrat laitier. On parle de pasteurisation lorsque le chauffage du substrat laitier est effectué à une température inférieure à 100°C, par exemple un chauffage à 92 à 95°C pendant 5 à 10 min). On parle de stérilisation lorsque le chauffage du substrat laitier est effectué à une température égale ou supérieure à 100°C. Il peut par exemple s'agir d'une stérilisation simple, ou d'une stérilisation UHT.

Selon un premier aspect de l'invention, la présente demande de brevet est relative à un procédé de fabrication en continu d'un produit laitier fermenté choisi parmi le groupe constitué par les yoghourts brassés, les yoghourts à boire, les laits fermentés brassés, et les laits fermentés à boire (de préférence les yoghourts à boire, les laits fermentés à boire), comprenant la mise en oeuvre d'au moins une souche de *Lactobacillus delbrueckii* ssp. *bulgaricus* et d'au moins une souche de *Streptococcus salivarius* ssp. *thermophilus.*

Le procédé en continu selon l'invention comprend :

- une première étape d'obtention d'au moins deux cultures distinctes de pré-fermentation,

  - l'une de ladite au moins une souche de *L. bulgaricus,* et
  - l'autre de ladite au moins une souche de *S. thermophilus,*

  dans au moins deux dispositifs distincts de pré-fermentation pFi (avec i nombre entier allant de 1 à n, et n nombre entier supérieur ou égal à 2), sans mélange de l'une de ces souches avec l'autre au sein d'un de ces au moins deux dispositifs de pré-fermentation $pFi_{i:1 \to n, n \geq 2}$,
  chacune de ces au moins deux cultures de pré-fermentation étant menée à une température comprise entre 40°C et 50°C (bornes incluses), sur un substrat laitier ayant subi un traitement thermique au moins équivalent à la pasteurisation, jusqu'à obtention d'un pH compris entre 5,6 et 5,9 (bornes incluses), de préférence entre 5,6 et 5,8 (bornes incluses), plus préférentiellement un pH de 5,7 environ, dans chacune desdites au moins deux cultures de pré-fermentation,

- une deuxième étape comprenant le fait de :

  a) faire fonctionner en continu chacun desdits au moins deux dispositifs de pré-fermentation $pFi_{i \to n, n \geq 2}$ en

  - prélevant en continu un volume de chacune desdites au moins deux cultures de pré-fermentation obtenue dans chacun desdits au moins deux dispositifs pFi de pré-fermentation, ce volume prélevé étant non nul mais inférieur au volume total de la culture de laquelle il est prélevé, et en
  - ré-alimentant en continu chacun desdits au moins deux dispositifs pFi de pré-fermentation en un volume sensiblement identique de substrat laitier non fermenté, tout en ajustant les flux ainsi créés à l'entrée et à la sortie de chacun desdits au moins deux dispositifs de pré-fermentation pFi de sorte à ce que le pH de chacune desdites au moins deux cultures de pré-fermentation à l'intérieur de chacun desdits au moins deux dispositifs pFi de pré-fermentation reste compris entre 5,6 et 5,9 (bornes incluses), de préférence entre 5 ,6 et 5,8 (bornes incluses), plus préférentiellement un pH de 5,7 environ,

  b) diriger le flux de sortie de chacun desdits au moins deux dispositifs de pré-fermentation pFi, sans mise en refroidissement, vers un ou plusieurs dispositif(s) de coagulation $Fc_j$ (avec j nombre entier allant de 1 à m, et m nombre entier supérieur ou égal à 1),
  de sorte que chaque dispositif de coagulation $Fc_j$ reçoit un volume de flux $VpFi_j$ de chacun desdits au moins deux dispositifs de pré-fermentation pFi,
  ce ou chacun des dispositif(s) $Fc_j$ de coagulation étant ou ayant été en outre par ailleurs alimenté en un volume $Vl_j$ de substrat laitier qui a subi un traitement thermique au moins équivalent à la pasteurisation,
  ce ou chacun des dispositif(s) $Fc_j$ de coagulation recevant ainsi d'une part un volume $Vl_j$ de ce substrat laitier, et recevant d'autre part un volume $VpFi_j$ de flux de sortie de chacun desdits au moins deux dispositifs de pré-fermentation pFi, ces volumes étant tels que

  le total des volumes de flux de dispositifs de pré-fermentation $\sum_i VpFi_{j \ i:1 \to n \ ; \ j=1-m}$ (avec i nombre entier allant de 1 à n, et j nombre entier choisi parmi 1 à m) reçu par un même dispositif de coagulation $Fc_j$ représente 30 à 70%, préférentiellement 40 à 60%, très préférentiellement 50% du volume total

$$\left[ \text{Vl}_j + \sum_i VpFi \right]_{j\,i:1\to n\,;\,j=1\text{-}m} \text{reçu par ce même dispositif de coagulation Fcj,}$$

c) le contenu dudit ou de chacun desdits dispositifs $Fc_j$ de coagulation étant alors soumis à une température comprise entre 40°C et 50°C (bornes incluses) de sorte à permettre le développement d'une fermentation jusqu'à obtention d'un pH compris entre 4 et 5 (pH cible de coagulation),

d) procéder au décaillage et au brassage du coagulum obtenu.

Ladite première étape d'obtention d'au moins deux cultures distinctes de pré-fermentation, l'une de ladite au moins une souche de *L. bulgaricus* et l'autre de ladite au moins une souche de *S. thermophilus* est une étape d'amorçage du procédé, qui permet de disposer des cultures de pré-fermentation requises au pH souhaité ; une fois cet état atteint, le procédé pouvant alors fonctionner en continu. Cette étape d'obtention d'au moins deux cultures distinctes de pré-fermentation est donc menée en mode discontinu (mode « batch ») en simple préalable au fonctionnement en continu des étapes b) à d). Cette étape est menée au début de chaque cycle de préparation du procédé selon l'invention.

Conformément au procédé selon l'invention, il peut n'être mis en oeuvre qu'un seul dispositif de coagulation Fc à la fois, ce dispositif Fc de coagulation recevant alors tout le flux de sortie de chacun desdits au moins deux dispositifs pFi de pré-fermentation. Dans ce cas, le procédé selon l'invention comprend lors de l'étape b) mentionnée ci-dessus le fait de verser le flux de sortie de chacun desdits au moins deux dispositifs de pré-fermentation pFi dans un même dispositif de coagulation Fc.

Dans ce mode de réalisation du procédé selon l'invention, un ou plusieurs autres dispositif(s) de coagulation peuvent alors, si souhaité, être préparés en parallèle de sorte à ce qu'après remplissage du dispositif Fc de coagulation, cet(ces) autre(s) dispositif(s) de coagulation soit(soient) prêt(s) à recevoir chacun à leur tour tout le flux de sortie de chacun desdits au moins deux dispositifs pFi de pré-fermentation. Dans ce cas, le fonctionnement en continu du procédé selon l'invention est donc poursuivi en ré-itérant les étapes b) à d) mentionnées ci-dessus avec au moins un autre dispositif de coagulation.

De manière avantageuse, le procédé selon l'invention peut alternativement comprendre la mise en oeuvre de plusieurs dispositifs de coagulation $Fc_j$ à la fois, et plus particulièrement au moins deux dispositifs de coagulation $Fc_j$, lesquels dispositifs de coagulation $Fc_j$ recevant alors chacun une partie du flux de sortie de chacun desdits au moins deux dispositifs pFi de pré-fermentation. Dans ce mode de réalisation, le procédé selon l'invention comprend lors de l'étape b) mentionnée ci-dessus le fait de distribuer le flux de sortie de chacun desdits au moins deux dispositifs de pré-fermentation pFi dans chacun des dispositifs de coagulation $Fc_j$.

Quel que soit le mode de réalisation choisi, chaque dispositif $Fc_j$ de coagulation reçoit toujours au moins un volume du flux de sortie d'une culture de pré-fermentation de *L. bulgaricus* et au moins un volume du flux de sortie d'une culture (distincte) de pré-fermentation de S. *thermophilus.*

Toute souche de *L. bulgaricus* et de *S. thermophilus* permettant de mener une fermentation lactique acidifiante sur substrat laitier est *a priori* adaptée à la mise en oeuvre de l'invention.

Des exemples de ladite au moins une souche de *L. bulgaricus* comprennent ainsi notamment la souche disponible auprès de la CNCM sous le numéro I-1632.

Des exemples de ladite au moins une souche de *S. thermophilus* comprennent ainsi notamment la souche disponible auprès de la CNCM sous le numéro I-1630, la souche disponible auprès de la CNCM sous le numéro I-2130.

L'adresse de la CNCM (= Collection Nationale de Cultures de Microorganismes) est CNCM ; Institut Pasteur ; 28 rue du Docteur Roux ; F-75724 Paris Cedex 15 ; France.

Le substrat laitier non fermenté qui ré-alimente en continu chacun desdits au moins deux dispositifs pFi de pré-fermentation peut être n'importe quel substrat laitier dont la composition est appropriée à la croissance et au métabolisme de la souche de microorganisme dont il doit supporter la culture.

Comme ce substrat est mis en oeuvre au stade des pré-fermentations et se retrouve ensuite mélangé à un autre substrat laitier versé directement dans le(s) dispositif(s) de coagulation, le substrat laitier non fermenté qui ré-alimente en continu chacun desdits au moins deux dispositifs pFi de pré-fermentation peut avantageusement être un substrat laitier simple à préparer, tel que par exemple du lait écrémé.

Le substrat laitier non fermenté qui ré-alimente en continu chacun desdits au moins deux dispositifs pFi de pré-fermentation est un substrat qui a subi un traitement thermique au moins équivalent à la pasteurisation. De préférence, il s'agit d'un substrat laitier qui a subi une stérilisation.

Ladite première étape d'obtention de cultures de pré-fermentation peut comprendre la culture de plusieurs souches de *Lactobacillus delbrueckii* ssp. *bulgaricus* (au moins deux, par exemple 2 ou 3 souches), chacune étant de préférence cultivée dans des dispositifs distincts pFi de pré-fermentation.

Ladite première étape d'obtention de cultures de pré-fermentation comprend la culture de plusieurs souches de *Streptococcus salivarius* ssp. *thermophilus* (au moins deux, par exemple 3 ou 4 souches), chacune étant de préférence cultivée dans des dispositifs distincts pFi de pré-fermentation.

Les bactéries lactiques thermophiles telles que *L. bulgaricus* et S. *thermophilus* peuvent présenter certaines auxotrophies, par exemple par rapport aux acides aminés. Ce type d'auxotrophies peut constituer un élément particulièrement limitant de la croissance cellulaire lorsque la culture est menée sur un substrat tel qu'un substrat laitier qui est particulièrement riche en protéines (caséine, par exemple), mais relativement pauvre en peptides.

Lorsqu'elles sont cultivées ensemble sur un substrat laitier, les bactéries *L. bulgaricus* et *S. thermophilus* coopèrent, le métabolisme des unes aidant aux métabolisme des autres (les unes fournissant des protéases, et les autres favorisant l'acidification).

Comme la présente invention requiert la culture séparée d'au moins une souche de *L. bulgaricus* et d'au moins une souche de *S. thermophilus,* cette coopération nutritionnelle ne peut s'exercer, et il peut être nécessaire, ou simplement plus avantageux, de fournir à chacune des cultures un apport nutritionnel externe, en sus du lait.

Afin de favoriser la croissance cellulaire et/ou le métabolisme de la ou de chacune des souches cultivée(s) en pré-fermentation, on peut donc conformément à la présente invention ajouter dans le substrat laitier utilisé en pré-fermentation tout composé ayant un effet favorable sur cette croissance et/ou sur le statut physiologique des cellules de la souche en culture.

Cet ajout de composé peut être réalisé lors de la première étape d'obtention de cultures de pré-fermentation, et/ou au cours de la deuxième étape lors de la ré-alimentation des dispositifs de pré-fermentation en substrat laitier non fermenté. De préférence, il(s) est(sont) ajouté(s) lors de la première étape d'obtention de cultures de pré-fermentation, et au cours de la deuxième étape lors de la ré-alimentation des dispositifs de pré-fermentation en substrat laitier non fermenté.

Pour la ou les cultures de pré-fermentation de souche(s) de *Lactobacillus delbrueckii* ssp. *Bulgaricus,* on peut avantageusement ajouter un composé qui favorise l'acidification du substrat laitier de pré-fermentation. Préférentiellement, on ajoutera du formiate, par exemple du formiate de sodium (e.g. formiate de sodium commercialisé par CHR Hansen).

La quantité de formiate ajoutée dépend de la quantité de biomasse en culture ; des quantités de l'ordre de 40 à 60 mg/l, de préférence 50 mg/l environ, sont généralement adaptées.

Pour la ou les cultures de pré-fermentation de souche(s) de *Streptococcus salivarius* ssp. *thermophilus,* on peut avantageusement ajouter des peptides dans le substrat laitier de pré-fermentation, par exemple des peptides constitués de 2 à 5 acides aminés, tels que lysine, leucine, théonine, phénylalanine, histidine, tyrosine.

Ces peptides peuvent être apportées sous forme pure ou substantiellement pure, ou sous forme d'une composition en comprenant, ou sous forme d'une composition comprenant une source de tels peptides.

De tels peptides peuvent par exemple être apportés sous la forme de la composition commercialisée sous la référence VITALARMOR 950 par la société Armor Protéine (F-35460 Saint-Brice-en-Cogles, France).

La quantité de peptides ajoutée dépend de la quantité de biomasse en culture, et peut être ajustée par la personne du métier.

La température des cultures de pré-fermentation est choisie de manière à être optimale pour la croissance et le statut physiologique des cellules de la souche en pré-culture. Les températures comprises entre 40°et 50°C sont généralement bien adaptées à la croissance et au métabolisme des cellules de *L. bulgaricus* et de *S. thermophilus.*

Pour la plupart des souches de *L. bulgaricus,* la température optimale est communément comprise entre 40 et 45°C (bornes incluses), préférentiellement 43°C environ.

Pour la plupart des souches de *S. thermophilus,* la température optimale est généralement comprise entre 42 et 47°C (bornes incluses), préférentiellement 45°C environ.

Lors du fonctionnement en continu desdites au moins deux cultures de pré-fermentation, on maintient donc une température comprise de préférence entre 40 et 50°C (bornes incluses).

Les dispositifs de pré-fermentation pFi mis en oeuvre conformément à la présente invention sont destinés à fonctionner en continu.

Pour ce faire, il convient donc d'alimenter les dispositifs de pré-fermentation de façon ininterrompue avec un substrat laitier, tout en soutirant un volume sensiblement identique du milieu pré-fermenté (mélange biomasse + substrat pré-fermenté), de façon à maintenir le volume contenu dans chacun des dispositifs de pré-fermentation sensiblement constant. Au démarrage, a lieu ladite première étape d'obtention d'au moins deux cultures distinctes de pré-fermentation (l'une de *L. bulgaricus,* l'autre de *S. thermophilus).* Après ensemencement, les microorganismes se développent. L'alimentation en continu est généralement lancée quand les microorganismes entrent en phase exponentielle de croissance. Chaque culture reçoit alors du substrat neuf, à un taux constant. A l'état stationnaire, il existe un équilibre de masse du système : le flux d'alimentation dans le dispositif de pré-fermentation est égal au flux de culture sortant. La formation de la biomasse est le résultat de l'addition de nutriments frais et est équilibrée par la perte de biomasse en sortie ; en conséquence, la biomasse reste sensiblement constante dans chacun des dispositifs de pré-fermentation (cf. équation de bilan de biomasse, présentée en partie « exemples » ci-dessous).

Les flux d'entrée et de sortie desdits au moins deux dispositifs pFi de pré-fermentation sont donc avantageusement ajustés de sorte à ce que la biomasse reste sensiblement constante dans chacun de ces dispositifs de pré-fermentation.

Les flux d'entrée et de sortie desdits au moins deux dispositifs pFi de pré-fermentation peuvent en outre être réglés de sorte à ce que le, ou le cas échéant, chacun des dispositifs de pré-fermentation $Fc_j$ reçoive des volumes de flux de sortie de pré-fermenteurs pFi en des proportions déterminées. Les volumes de flux de sortie de pré-fermenteurs pFi qui sont reçus par un dispositif de coagulation $Fc_j$ constituent en effet un apport d'inoculum pour ce dispositif $Fc_j$ de coagulation. On peut choisir de bien maîtriser les proportions relatives de chacune des souches apportées. Le choix de ces proportions relatives influe en effet sur la consistance et la qualité organoleptique du produit fini. Dans le cas de la fabrication de yoghourts brassés ou à boire, il est particulièrement avantageux d'apporter les flux de pré-ferment(s) *L. bulgaricus* et de de pré-ferment(s) *S. thermophilus* dans des proportions relatives respectives de 10% *L. bulgaricus* pour 90% S. *thermophilus,* pour chaque dispositif de coagulation $Fc_j$ concerné.

Conformément au procédé selon l'invention, le dispositif de coagulation $Fc_j$, ou, le cas échéant, chacun des dispositif(s) de coagulation $Fc_j$, reçoit, en sus des volumes de flux de sortie issus de chacun des dispositifs de pré-fermentation, un volume $VI_j$ de substrat laitier.

Ce volume $VI_j$ de substrat laitier est un volume de substrat laitier qui a subi un traitement thermique au moins équivalent à la pasteurisation. Il peut par exemple s'agir de substrat laitier ayant subi une pasteurisation (c'est-à-dire un traitement ayant pour objectif premier la destruction des germes pathogènes et comprenant un chauffage à une température inférieure à 100°C, par exemple un chauffage à 92 à 95°C pendant 5 à 10 min), ou de substrat laitier ayant subi une stérilisation (c'est-à-dire un traitement ayant pour objectif la destruction des germes pathogènes et comprenant un chauffage à une température égale ou supérieure à 100°C, par exemple une stérilisation simple, ou une stérilisation UHT). Comme ce substrat laitier constitue une base importante du produit fini en fabrication, ce substrat laitier sera choisi par la personne du métier en fonction de la nature et de la composition du produit fini visé. Pour des yaourts et laits fermentés brassés ou à boire, il est communément préféré d'utiliser un substrat laitier pasteurisé (car ce traitement respecte mieux les qualités organoleptiques du produit que la stérilisation) : le volume $VI_j$ de substrat laitier reçu par ledit au moins un dispositif $Fc_j$ de coagulation sera donc préférentiellement un substrat laitier pasteurisé.

Le volume $VI_j$ de substrat laitier qui est apporté dans ledit au moins un dispositif $Fc_j$ de coagulation peut correspondre à du lait, une composition à base de lait « standardisée » par ajout- de produits dérivés du lait tels que poudre de lait écrémé, et/ou poudres de protéines laitières (caséinates ou WPC), et/ou matières grasses (crème, par exemple). Pour des yaourts et laits fermentés brassés ou à boire, des compositions laitières « standardisées » sont communément utilisées (« pré-mix »).

Par exemple, si le produit fini souhaité est un yoghourt de type yoghourt à boire, on peut utiliser un volume $VI_j$ de substrat laitier qui comprend de l'eau à 78,2%, de la poudre de lait écrémé à 8,2%, de la crème à 3,8% et du sucre à 9,7%.

Le volume $VI_j$ de substrat laitier qui est apporté dans ledit au moins un dispositif $Fc_j$ de coagulation peut être un substrat laitier fermenté, pré-fermenté, ou non fermenté. De préférence, on choisira un substrat laitier non fermenté.

Plusieurs des, et préférentiellement tous les flux de sortie desdits au moins deux dispositifs pFi de pré-fermentation peuvent être mélangés ensemble avant d'être versés dans $Fc_j$, par exemple en les dirigeant tous au sein d'un seul et même conduit, lequel conduit faisant alors office à la fois de moyen de guidage et de moyen de mélange.

Alternativement, les flux respectifs de sortie desdits au moins deux dispositifs pFi de pré-fermentation peuvent ne pas être mélangés ensemble avant d'être versés dans ledit(lesdits) dispositif(s) $Fc_j$ de coagulation ; ils arrivent alors séparément dans ledit(lesdits) dispositif(s) $Fc_j$ de coagulation, lequel(lesquels) dispositif(s) $Fc_j$ de coagulation étant alors préférablement muni(s) d'un système d'agitation.

Le pH de chacune desdites au moins deux cultures de pré-fermentation présentes dans chacun desdits au moins deux dispositifs pFi de pré-fermentation est compris entre 5,6 et 5,9 (bornes incluses), préférentiellement entre 5,6 et 5,8 (bornes incluses), plus préférentiellement égal à 5,7 environ.

Le pH du milieu pré-fermenté prelevé en flux de sortie desdits au moins deux dispositifs pFi de pré-fermentation est donc compris entre 5,6 et 5,8 (bornes incluses), plus préférentiellement égal à 5,7 environ.

Le pH du coagulum obtenu dans ledit au moins un dispositif $Fc_j$ de coagulation est compris entre 4 et 5 (bornes incluses), préférentiellement entre 4,4 et 4,8 (bornes incluses), plus préférentiellement entre 4,5 et 4,7 (bornes incluses), encore plus préférentiellement égal à 4,6 environ.

Selon un mode avantageux de réalisation de l'invention, le procédé peut en outre comprendre la mise en oeuvre d'au moins une autre souche n'appartenant ni à la sous-espèce *L. bulgaricus* ni à l'espèce *S. thermophilus.* Une telle souche peut notamment appartenir au genre *Bifidobacterium,* ou à une espèce ou sous-espèce de *Lactobacillus* autre que *L. bulgaricus.*

Ladite au moins une autre souche peut avantageusement être une souche probiotique. Un probiotique est un microorganisme qui est présent à l'état vivant dans un produit alimentaire et qui présente des effets bénéfiques sur la santé de son hôte (définition adoptée en 2002 par l'Organisation des Nations Unies pour l'Alimentation et l'Agriculture et par l'Organisation Mondiale de la Santé).

Plus particulièrement, une telle souche probiotique peut avantageusement être choisie parmi le genre *Bifidobacterium,* ou parmi les espèces ou sous-espèces de *Lactobacillus* autres que *L. bulgaricus.*

Parmi les bactéries du genre *Bifidobacterium,* la personne du métier peut avantageusement choisir une souche de l'espèce *Bifidobacterium animalis, Bifidobacterium breve, Bifidobacterium longum.*

Parmi les espèces ou sous-espèces de *Lactobacillus* autres que *L. bulgaricus,* la personne du métier peut avantageusement choisir une souche de l'espèce *Lactobacillus casei* ssp. *casei,* de l'espèce *Lactobacillus helveticus,* de l'espèce *Lactobacillus acidophilus,* de l'espèce *Lactobacillus rhamnosus,* de l'espèce *Lactobacillus johnsonü,* de l'espèce *Lactobacillus plantarum,* de l'espèce *Lactobacillus salivarius,* de l'espèce *Lactobacillus lactis,* de l'espèce *Lactobacillus cremoris.*

Les souches probiotiques préférées comprennent notamment les souches de *Bifidobacterium animalis, Bifidobacterium breve, Lactobacillus plantarum, Lactobacillus casei.*

Des exemples de telles souches probiotiques comprennent notamment :

- la souche de *Lactobacillus plantarum* déposée le 16 mars 1995 sous le numéro DSM 9843 auprès de la Deutsche Sammlung von Mikroorganismen und Zellkulturen GmbH, Braunschweig, Allemagne,
- la souche de *Lactobacillus casei* déposée le 28 septembre 1994 sous le numéro I-1518,
- la souche de *Bifidobacterium animalis* déposée le 20 mai 2000 sous le numéro I-2494,
- la souche de *Bifidobacterium breve* déposée le 31 mai 1995 sous le numéro I-2219,
- ces trois dernière souches ayant été déposées auprès de la CNCM (Collection Nationale de Cultures de Microorganismes ; Institut Pasteur, 25 rue du Docteur Roux, à Paris).

Cette au moins une autre souche peut par exemple être cultivée sur un substrat laitier ayant subi un traitement thermique au moins équivalent à la pasteurisation dans au moins un dispositif de pré-fermention pFk (avec k nombre entier supérieur ou égal à 1), cet au moins un dispositif pFk étant distinct desdits au moins deux dispositifs de pré-fermention pFi dans lesquels sont cultivées ladite au moins une souche de *L. bulgaricus* et ladite au moins une souche de S. *thermophilus.*

Avantageusement, ledit au moins un dispositif de pré-fermention pFk peut fonctionner en continu, par prélèvement en continu d'un volume de la culture obtenue dans ledit au moins un dispositif pFk de pré-fermentation, ce volume prélevé étant non nul mais inférieur au volume total de la culture de laquelle il est prélevé, et par ré-alimentation en continu dudit au moins un dispositif pFk de pré-fermentation en un volume sensiblement identique de substrat laitier non fermenté. Le flux de sortie dudit au moins un dispositif pFk de pré-fermentation peut alors être dirigé vers le ou chacun des dispositif(s) de coagulation $Fc_j$ qui reçoit(reçoivent) le flux de sortie de chacun desdits au moins deux dispositifs pFi de pré-fermentation.

Ladite au moins une autre souche peut alternativement et/ou complémentairement être ajoutée dans le ou chacun des dispositif(s) de coagulation $Fc_j$ qui reçoit(reçoivent) le flux de sortie de chacun desdits au moins deux dispositifs pFi de pré-fermentation. De .préférence cette au moins une autre souche est ajoutée dans ce(s) dispositif(s) $Fc_j$ de coagulation avant que la fermentation post-acidifiante n'ait totalement commencé, c'est-à-dire avant, en même temps ou peu de temps après que le(s) dispositif(s) de coagulation ne reçoit(reçoivent) le volume $Vl_j$ de de substrat laitier et lesdits volumes $VpFi_j$ de flux de sortie de dispositifs pFi de pré-fermentation (i allant de 1 à n).

Le ou, le cas échéant, chacun des dispositif(s) de coagulation $Fc_j$ reçoit un volume $Vl_j$ de substrat laitier, des volumes de flux de sortie desdits dispositifs pFi de pré-fermentation de *L. bulgaricus* et S. *thermophilus,* et éventuellement une ou plusieurs souche(s) autre(s) que *L. bulgaricus* et S. *thermophilus.*

L'ensemble est maintenu à une température comprise entre 40°C et 50°C (bornes incluses), de sorte à assurer le développement d'une fermentation lactique acidifiante jusqu'à coagulation (le pH est alors compris entre 4 et 5, bornes incluses).

Le coagulum obtenu est alors soumis à un décaillage et à un brassage (étape d) du procédé). Ce brassage peut par exemple être un brassage mécanique (cas des yoghourts et lais fermentés brassés), ou un brassage par homogénéisateur sous pression (cas des yoghourts et laits fermentés à boire, par exemple).

Après ladite étape d) de décaillage et brassage, le procédé selon l'invention peut comprendre une étape de conditionnement du coagulum obtenu dans ledit ou chacun desdits dispositif(s) de coagulation $Fc_j$, au cours de laquelle ce(ces) coagulum(s) est(sont) distribué(s) hors dudit(desdits) dispositif(s) $Fc_j$ de coagulation vers un récipient ou plusieurs récipients de conditionnement.

Après étape d) de décaillage et brassage, et de préférence avant ladite étape de conditionnement, le procédé peut comprendre une étape de refroidissement du coagulum. Cette étape de refroidissement permet notamment d'arrêter ou de freiner l'acidification produite par la fermentation lactique.

Le procédé selon l'invention peut naturellement également comprendre l'ajout de fruit(s), d'arôme(s) ou autre(s) additif(s) lors de ladite étape de conditionnement et/ou lors de ladite étape de refroidissement.

La présente invention est également relative aux produits, yoghourts et laits fermentés brassés et à boire, qui sont susceptibles d'être obtenus par le procédé selon l'invention. Elle vise plus particulièrement les yoghourts à boire et les laits fermentés à boire, qui sont susceptibles d'être obtenus par le procédé selon l'invention.

Un autre aspect de la présente demande de brevet vise un dispositif spécialement à la mise en oeuvre du procédé selon l'invention. Le dispositif selon l'invention permet la fabrication en continu d'un produit laitier fermenté choisi parmi le groupe constitué par les yoghourts brassés, les yoghourts à boire, les laits fermentés brassés, et les laits fermentés à boire (de préférence les yoghourts à boire, les laits fermentés à boire).

Il comprend :

- au moins un dispositif de coagulation $Fc_j$ pourvu d'au moins une entrée (avec j nombre entier allant de 1 à m, et m nombre entier supérieur ou égal à 1),
- au moins deux dispositifs de pré-fermentation pFi (avec i nombre entier allant de 1 à n, et n nombre entier supérieur ou égal à 2), chacun pourvu d'au moins une entrée et d'au moins une sortie.

Un dispositif de coagulation est généralement constitué par un fermenteur classique. Pour assurer le fonction en continu desdits dispositifs de pré-fermentation pFi, le dispositif selon l'invention comprend :

- des moyens d'alimentation en continu de pré-fermenteur, pour alimenter en continu en substrat laitier chacun desdits au moins deux dispositifs de pré-fermentation $pFi_{i:1 \rightarrow n, \, n \geq 2}$, et
- des moyens de prélèvement en continu de pré-fermenteur, pour prélever en continu du milieu pré-fermenté de chacun desdits au moins deux dispositifs de pré-fermentation $pFi_{i:1 \rightarrow n, \, n \geq 2}$.

Des moyens adaptés à l'alimentation et au prélèvement en continu de dispositif de pré-fermentation sont connus de la personne du métier. Ils peuvent notamment comprendr des conduits ou conduites, munis de vannes (pour contrôler les flux). Ces vannes peuvent fonctionner comme des pompes. Ces moyens peuvent en outre comprendre des sondes et/ou calculateurs pour régler l'ouverture desdites vannes.

Pour distribuer les flux de sortie desdits dispositifs de pré-fermentation pFi jusqu'au(x) dispositif(s) $Fc_j$ de coagulation, le dispositif selon l'invention comprend :

- des moyens de guidage adaptés à diriger et/ou distribuer le milieu pré-fermenté prélevé de chacun desdits au moins deux dispositifs de pré-fermentation $pFi_{i:1 \rightarrow n, \, n \geq 2}$ dans ledit ou, le cas échéant, chacun desdits dispositifs $Fc_j$ de coagulation, de sorte à ce que chacun desdits dispositifs $Fc_j$ de coagulation puisse ainsi recevoir un volume du milieu pré-fermenté prélevé de chacun desdits au moins deux dispositifs de pré-fermentation $pFi_{i:1 \rightarrow n, \, n \geq 2}$.

Pour apporter au(x) dispositif(s) $Fc_j$ de coagulation le volume $Vl_j$ de substrat laitier, le dispositif selon l'invention comprend des moyens d'alimentation de coagulateur permettant d'alimenter en substrat laitier ce(ces) même(s) dispositif(s) $Fc_j$ de coagulation.

Le dispositif selon l'invention ne comprend pas de moyens de mise en refroidissement qui permettraient de mettre en refroidissement le milieu pré-fermenté qui est prélevé de chacun desdits au moins deux dispositifs de pré-fermentation $pFi_{i:1 \rightarrow n, \, n \geq 2}$, et dirigé et/ou distribué dans ledit dispositif $Fc_j$ de coagulation ou, le cas échéant, chacun desdits mêmes dispositifs $Fc_j$ de coagulation.

Le dispositif selon l'invention peut comprendre plus de deux dispositifs de pré-fermentation $pFi_{1; j \rightarrow n, \, n \geq 2}$, avec n nombre entier supérieur à 2, chacun pourvu d'au moins une entrée et d'au moins une sortie.

Il peut par ailleurs également comprendre plus d'un dispositif de coagulation $Fc_j$, par exemple de deux à vingt dispositifs de coagulation $Fc_j$.

Le dispositif selon l'invention peut en outre comprendre des moyens permettant de déplacer chacun desdits au moins deux dispositifs de coagulation $Fc_j$ jusqu'à une position leur permettant de recevoir ledit milieu pré-fermenté prélevé de chacun desdits au moins deux dispositifs de pré-fermentation pFi.

Eventuellement, le dispositif selon l'invention peut en outre comprendre un ou plusieurs dispositifs de pré-fermentation pFk (chacun muni d'au moins une entrée et d'au moins une sortie) pour la pré-fermentation de cultures autres que *L. bulgaricus* et *S. thermophilus,* en particulier pour la pré-fermentation d'autres souches probiotiques.

Les exemples qui suivent sont donnés à titre purement illustratif, et non limitatif.

## EXEMPLES

La préparation du substrat laitier (« mix »):

Dans cet exemple, le substrat laitier utilisé pour la pré-fermentation des ferments est un mélange laitier (2,8% protéines/1,6% matières grasses/9,7% sucre). La composition de ce substrat laitier doit être favorable au développement des bactéries lactiques (et donc avoir un % de protéines proche de celui du lait, soit environ 3,5%). La préparation du substrat laitier s'effectue selon la méthode traditionnelle.

Ce substrat laitier subit ensuite un traitement thermique afin d'inactiver les germes vivants. Il est ensuite conservé à 4 °C.

Afin d'assurer le développement rapide des souches en absence de symbiose, on enrichit ce substrat laitier en suppléments de croissance : des peptides pour *Streptococcus thermophilus* (CNCM I-1630), du formiate pour *Lactobacillus bulgaricus* (CNCM I-1632) à des taux d'ensemencement permettant une croissance optimale. Dans les conditions étudiées, on utilise 50 mg/l de formiate et 0,1 g/l de peptide (Vitalarmor 950).

Pré-fermentation en continu : Fabrication « des levains » de L. bulgaricus et de S. thermophilus en cuves séparées

L'élément clé de cette étape est d'assurer une biomasse constante dans les fermenteurs à un pH favorable au développement de ces souches (pH de 5,7 environ).

Dans un premier temps, il est nécessaire de connaître le taux de croissance ($\mu$) des souches utilisées.

L'équation du bilan de biomasse s'écrit :

$$\text{Accumulation de la biomasse} = \text{biomasse entrante} - \text{biomasse sortante} + \text{croissance cellulaire} - \text{mort cellulaire}$$

$$\frac{dX}{dt} = \frac{F}{V}X_0 - \frac{F}{V}X + \mu X - \mu_d X$$

X = biomasse (g.L$^{-1}$ ou nombre de cellules)
t = temps (h)
F = débit volumique du milieu nutritif (L.h$^{-1}$)
V = volume du fermenteur (L)
$\mu$ = taux de croissance (h$^{-1}$)

A l'équilibre, on a :

$$\frac{dX}{dt} = 0$$

d'où

$$\mu = \frac{F}{V} = D$$

D = taux de dilution (h$^{-1}$)

Quand le taux de croissance est déterminé, on peut alors démarrer les fabrications.

Le substrat laitier est réchauffé à la température de fermentation optimale des 2 souches : 43°C pour *Lactobacillus bulgaricus* et 45°C pour *Streptococcus thermophilus.* L'ensemencement est réalisé à partir de souches pures à un taux d'inoculation de 0,1 %. Quand le pH cible de 5,7 est atteint, la régulation peut alors avoir lieu.

La régulation s'effectue en ajoutant en continu du substrat laitier « modèle » stocké à 4 °C (avec suppléments de croissance), et en soutirant le même volume de substrat laitier fermenté. Le débit des 2 pompes (celle d'alimentation et celle de soutirage) est déterminé en fonction du taux de croissance des bactéries.

*Streptococcus thermophilus* a un taux de croissance de 1,4 h$^{-1}$ ; *Lactobacillus bulgaricus* a un taux de croissance de 1,1 h$^{-1}$.

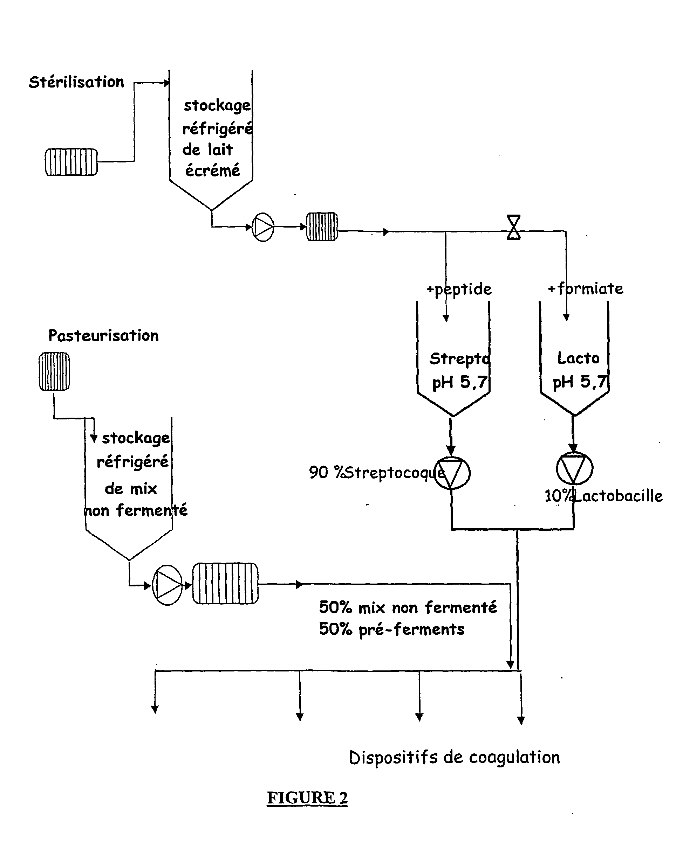

C'est à ce moment que débute l'inoculation en continu des cuves de caillage (voir figure 2).

On incorpore 50 % d'un nouveau substrat laitier non fermenté pasteurisé, à 50 % d'inoculum. L'inoculum est composé de 90 % de volume préfermenté contenant de la biomasse *Streptococcus thermophilus* et 10 % de volume préfermenté contenant de la biomasse *Lactobacillus bulgaricus.*

Dans cet exemple, le substrat laitier non fermenté ensemencé a la même formulation que le substrat de pré-fermentation et a également subi un traitement thermique. Des compositions différentes peuvent néanmoins être mises en oeuvre, sans adaptation particulière.

Fermentation et décaillage en cuve:

Une fermentation lactique acidifiante est ensuite conduite, jusqu'au pH final de 4,55. Cette fermentation est suivie d'un décaillage en cuve et d'un transfert avec refroidissement à la température de conditionnement.

Résultats de l'expérimentation :

Les conditions d'ensemencement de la cuve de fermentation finale sont les suivantes : 90 % de pré-ferment *Streptococcus thermophilus* en symbiose avec 10 % de pré-ferment *Lactobacillus bulgaricus.*

Le procédé standard utilise un ratio de biomasse un peu différent (80 % de *Streptococcus thermophilus* et 20 % *Lactobacillus bulgaricus*).

Dans ces conditions, les produits fermentés résultant de la fabrication en continu ont caractéristiques physico-chimiques (pH/texture du caillé, biomasse) comparables au témoin, et stables sur plus de 3h de pré-fermentation continue.

Il est également constaté que la cinétique d'acidification de pH 5,7 à 4,55 est également comparable à celle du procédé témoin.

| | Témoin 80 % S et 20 % L | | Essai 90% S et 10 % L | | Essai 90% S et 10 % L | |
|---|---|---|---|---|---|---|
| Moment de soutirage | | | T+0h | | T+3h20 | |
| | **J+1** | *J+14* | J+1 | *J+14* | J+14 | *J+14* |
| PH | **4,36** | *4,16* | 4,31 | *4, 09* | 4,32 | *4,11* |
| Acidité °D | | **87** | | *93* | | *91* |
| TAXT2 f15 mm (g) | **15,2** | **19,2** | 15,4 | *19,3* | 14,8 | *18,1* |
| Streptococcus Thermophilus UFC/ml | **2,35E+08** | *3,87E+08 ;* | 3,35E+08. | *4,08E+08* | 4,08E+08 | *4, 03E+08* |
| Lactococcus Bulgaricus UFC/ml | **5,80E+07** | *7, 60E+07* | 8,80E+07 | *9,80E+07* | 6,80E+07 | *7,10E+07* |

## Revendications

**1.** Procédé de fabrication en continu d'un produit laitier fermenté choisi parmi le groupe constitué par les yoghourts brassés, les yoghourts à boire, les laits fermentés brassés, et les laits fermentés à boire, comprenant la mise en oeuvre d'au moins une souche de *Lactobacillus delbrueckii* ssp. *bulgaricus* et d'au moins une souche de *Streptococcus salivarius* ssp. *thermophilus,* lequel procédé en continu étant **caractérisé en ce qu'**il comprend :

- une première étape d'obtention d'au moins deux cultures distinctes de pré-fermentation,

 - l'une de ladite au moins une souche de *L. bulgaricus,* et
 - l'autre de ladite au moins une souche de S. *thermophilus,*

dans au moins deux dispositifs distincts de pré-fermentation pFi (avec i nombre entier allant de 1 à n, et n nombre entier supérieur ou égal à 2), sans mélange de l'une de ces souches avec l'autre au sein d'un de ces au moins deux dispositifs de pré-fermentation $pFi_{i:1 \to n,\ n \geq 2}$, chacune de ces au moins deux cultures de pré-fermentation étant menée à une température comprise entre 40°C et 50°C (bornes incluses), sur un substrat laitier ayant subi un traitement thermique au moins équivalent à la pasteurisation, jusqu'à obtention d'un pH compris entre 5,6 et 5,9 (bornes incluses) dans chacune desdites au moins deux cultures de pré-fermentation,

- une deuxième étape comprenant le fait de :

 a) faire fonctionner en continu chacun desdits au moins deux dispositifs de pré-fermentation $PFi_{i:1 \to n,\ n \geq 2}$ en

- prélevant en continu un volume de chacune desdites au moins deux cultures de pré-fermentation obtenue dans chacun desdits au moins deux dispositifs pFi de pré-fermentation, ce volume prélevé étant non nul mais inférieur au volume total de la culture de laquelle il est prélevé, et en

- ré-alimentant en continu chacun desdits au moins deux dispositifs pFi de pré-fermentation en un volume sensiblement identique de substrat laitier non fermenté, tout en ajustant les flux ainsi créés à l'entrée et à la sortie de chacun desdits au moins deux dispositifs de pré-fermentation pFi de sorte à ce que le pH de chacune desdites au moins deux cultures de pré-fermentation à l'intérieur de chacun desdits au moins deux dispositifs pFi de pré-fermentation reste compris entre 5,6 et 5,9 (bornes incluses),

b) diriger le flux de sortie de chacun desdits au moins deux dispositifs de pré-fermentation pFi, sans mise en refroidissement, vers un ou plusieurs dispositif(s) de coagulation $Fc_j$ (avec j nombre entier allant de 1 à m, et m nombre entier supérieur ou égal à 1),

de sorte que chaque dispositif de coagulation $Fc_j$ reçoit un volume de flux $VpFi_j$ de chacun desdits au moins deux dispositifs de pré-fermentation pFi,

ce ou chacun des dispositif(s) $Fc_j$ de coagulation étant ou ayant été en outre par ailleurs alimenté en un volume $Vl_j$ de substrat laitier qui a subi un traitement thermique au moins équivalent à la pasteurisation,

ce ou chacun des dispositif(s) $Fc_j$ de coagulation recevant ainsi d'une part un volume $Vl_j$ de ce substrat laitier, et recevant d'autre part un volume $VpFi_j$ de flux de sortie de chacun desdits au moins deux dispositifs de pré-fermentation pFi, ces volumes étant tels que

le total des volumes de flux de dispositifs de pré-fermentation $\sum_i VpFi_{j\ i:1\to n\ ;\ j=1\text{-}m}$ (avec i nombre entier allant de 1 à n, et j nombre entier choisi parmi 1 à m) reçu par un même dispositif de coagulation $Fc_j$

représente 30 à 70% du volume total $\left[\ Vl_j + \right.$

$\left. \sum_i VpFi_{j\ i:1\to n\ ;\ j=1\text{-}m}\ \right]$ reçu par ce même dispositif de coagulation $Fc_j$,

c) le contenu dudit ou de chacun desdits dispositifs $Fc_j$ de coagulation étant alors soumis à une température comprise entre 40°C et 50°C (bornes incluses) de sorte à permettre le développement d'une fermentation jusqu'à obtention d'un pH compris entre 4 et 5,

d) procéder au décaillage et au brassage du coagulum obtenu.

2. Procédé selon la revendication 1, **caractérisé en ce que** le total des volumes de flux de dispositifs de pré-fermentation $\sum_i VpFi_{j\ i:1\to n\ ;\ j=1\text{-}m}$ (avec i nombre entier allant de 1 à n, et j nombre entier choisi parmi 1 à m) reçu par un même dispositif de coagulation $Fc_j$ représente 50% du volume total $\left[\ Vl_j + \sum_i VpFi_{j\ i:1\to n\ ;\ j=1\text{-}m}\ \right]$ reçu par ce même dispositif de coagulation $Fc_j$.

3. Procédé selon l'une quelconque des revendications précédentes, **caractérisé en ce que** le substrat laitier non fermenté qui ré-alimente en continu chacun desdits au moins deux dispositifs pFi de pré-fermentation est un substrat stérilisé.

4. Procédé selon l'une quelconque des revendications précédentes, **caractérisé en ce que** ladite première étape d'obtention de cultures de pré-fermentation comprend la culture de plusieurs souches de *Lactobacillus delbrueckii* ssp. *bulgaricus,* chacune étant cultivée dans des dispositifs distincts pFi de pré-fermentation.

5. Procédé selon l'une quelconque des revendications précédentes, **caractérisé en ce que** ladite première étape d'obtention de cultures de pré-fermentation comprend la culture de plusieurs souches de *Streptococcus salivarius* ssp. *thermophilus,* chacune étant cultivée dans des dispositifs distincts pFi de pré-fermentation.

6. Procédé selon l'une quelconque des revendications précédentes, **caractérisé en ce que** l'on ajoute du formiate dans le substrat laitier de la ou les cultures de pré-fermentation de souche(s) de *Lactobacillus delbrueckii* ssp. *bulgaricus.*

**7.** Procédé selon l'une quelconque des revendications précédentes, **caractérisé en ce que** l'on ajoute des peptides dans la ou les cultures de pré-fermentation de souche(s) de *Streptococcus salivarius* ssp. *thermophilus.*

**8.** Procédé selon l'une quelconque des revendications précédentes, **caractérisé en ce que** la température de culture de pré-fermentation de ladite au moins une souche de *L. bulgaricus* est de 43°C.

**9.** Procédé selon l'une quelconque des revendications précédentes, **caractérisé en ce que** la température de culture de pré-fermentation de ladite au moins une souche de S. *thermophilus* est de 45°C.

**10.** Procédé selon l'une quelconque des revendications précédentes, **caractérisé en ce que** le volume $Vl_j$ de substrat laitier reçu par ledit au moins un dispositif $Fc_j$ de coagulation est un volume de substrat laitier pasteurisé.

**11.** Procédé selon l'une quelconque des revendications précédentes, **caractérisé en ce que** le volume $Vl_j$ de substrat laitier reçu par ledit au moins un dispositif $Fc_j$ de coagulation est un volume de substrat laitier non fermenté.

**12.** Procédé selon l'une quelconque des revendications 1 à 11, **caractérisé en ce que** les flux de sortie desdits au moins deux dispositifs pFi de pré-fermentation sont mélangés ensemble avant d'être versés dans ledit(lesdits) dispositif(s) $Fc_j$ de coagulation.

**13.** Procédé selon l'une quelconque des revendications 1 à 11, **caractérisé en ce que** les flux de sortie desdits au moins deux dispositifs pFi de pré-fermentation ne sont pas mélangés ensemble avant d'être versés dans ledit (lesdits) dispositif(s) $Fc_j$ de coagulation.

**14.** Procédé selon l'une quelconque des revendications précédentes, **caractérisé en ce que** le pH de chacune desdites au moins deux cultures de pré-fermentation présentes dans chacun desdits au moins deux dispositifs pFi de pré-fermentation est de 5,7.

**15.** Procédé selon l'une quelconque des revendications précédentes, **caractérisé en ce que** le pH du coagulum obtenu dans ledit au moins un dispositif $Fc_j$ de coagulation est compris entre 4,5 et 4,7.

**16.** Procédé selon l'une quelconque des revendications précédentes, **caractérisé en ce qu'**il comprend en outre la mise en oeuvre d'au moins une autre souche n'appartenant ni à la sous-espèce *L. bulgaricus* ni à l'espèce S. *thermophilus.*

**17.** Procédé selon la revendication 16, **caractérisé en ce que** ladite au moins une autre souche appartient au genre *Bifidobacterium,* ou à une espèce ou sous-espèce de *Lactobacillus* autre que *L. bulgaricus.*

**18.** Procédé selon la revendication 16 ou 17, **caractérisé en ce que** ladite au moins une autre souche est cultivée sur un substrat laitier ayant subi un traitement thermique au moins équivalent à la pasteurisation dans au moins un dispositif de pré-fermention pFk (avec k nombre entier supérieur ou égal à 1), cet au moins un pFk étant distinct desdits au moins deux dispositifs de pré-fermention pFi dans lesquels sont cultivées ladite au moins une souche de *L. bulgaricus* et ladite au moins une souche de S. *thermophilus.*

**19.** Procédé selon la revendication 18, **caractérisé en ce que** ledit au moins un dispositif de pré-fermention pFk fonctionne en continu, par prélèvement en continu d'un volume de la culture obtenue dans ledit au moins un dispositif pFk de pré-fermentation, ce volume prélevé étant non nul mais inférieur au volume total de la culture de laquelle il est prélevé, et par ré-alimentation en continu dudit au moins un dispositif pFk de pré-fermentation en un volume sensiblement identique de substrat laitier non fermenté, et **en ce que** le flux de sortie dudit au moins un dispositif pFk de pré-fermentation est dirigé vers le ou chacun des dispositif(s) de coagulation $Fc_j$ qui reçoit(reçoivent) le flux de sortie de chacun desdits au moins deux dispositifs pFi de pré-fermentation.

**20.** Procédé selon la revendication 16 ou 17, **caractérisé en ce que** ladite au moins une autre souche est ajoutée dans le ou chacun des dispositif(s) de coagulation $Fc_j$ qui reçoit(reçoivent) le flux de sortie de chacun desdits au moins deux dispositifs pFi de pré-fermentation.

**21.** Procédé selon l'une quelconque des revendications 1 à 20, **caractérisé en ce que** ledit brassage est un brassage mécanique.

22. Procédé selon l'une quelconque des revendications 1 à 20, **caractérisé en ce que** ledit brassage est un brassage par homogénéisateur sous pression.

23. Procédé selon l'une quelconque des revendications précédentes, **caractérisé en ce que** après ladite étape d) de décaillage et brassage, le procédé comprend une étape de conditionnement du coagulum obtenu dans ledit ou chacun desdits dispositif(s) de coagulation $Fc_j$, au cours de laquelle ce(ces) coagulum(s) est(sont) distribué(s) hors dudit(desdits) dispositif(s) $Fc_j$ de coagulation vers un récipient ou plusieurs récipients de conditionnement.

24. Procédé selon la revendication 23, **caractérisé en ce qu'**après ladite étape d) de décaillage et brassage, et avant ladite étape de conditionnement, le procédé comprend une étape de refroidissement du coagulum.

25. Procédé selon la revendication 23 ou 24, **caractérisé en ce qu'**il comprend l'ajout de fruit(s), d'arôme(s) ou autre (s) additif(s) lors de ladite étape de conditionnement et/ou lors de ladite étape de refroidissement.

26. Dispositif adapté à la mise en oeuvre du procédé selon l'une quelconque des revendications 1 à 25, **caractérisé en ce qu'**il comprend :

   - au moins un dispositif de coagulation $Fc_j$ pourvu d'au moins une entrée (avec j nombre entier allant de 1 à m, et m nombre entier supérieur ou égal à 1),
   - au moins deux dispositifs de pré-fermentation $pFi$ (avec i nombre entier allant de 1 à n, et n nombre entier supérieur ou égal à 2), chacun pourvu d'au moins une entrée et d'au moins une sortie,
   - des moyens d'alimentation en continu de pré-fermenteur, pour alimenter en continu en substrat laitier chacun desdits au moins deux dispositifs de pré-fermentation $pFi_{i:1 \to n, n \geq 2}$,
   - des moyens de prélèvement en continu de pré-fermenteur, pour prélever en continu du milieu pré-fermenté de chacun desdits au moins deux dispositifs de pré-fermentation $pFi_{i:1 \to n, n \geq 2}$,
   - des moyens de guidage adaptés à diriger et/ou distribuer le milieu pré-fermenté prélevé de chacun desdits au moins deux dispositifs de pré-fermentation $pFi_{1:1-n, n \geq 2}$ dans ledit ou, le cas échéant, chacun desdits dispositifs $Fc_j$ de coagulation, de sorte à ce que chacun desdits dispositifs $Fc_j$ de coagulation puisse ainsi recevoir un volume du milieu pré-fermenté prélevé de chacun desdits au moins deux dispositifs de pré-fermentation $pFi_{i:1 \to n, n \geq 2}$, et
   - des moyens d'alimentation de coagulateur permettant d'alimenter en substrat laitier ce(ces) même(s) dispositif (s) $Fc_j$ de coagulation,
   ledit dispositif ne comprenant pas de moyens de mise en refroidissement qui permettraient de mettre en refroidissement le milieu pré-fermenté qui est prélevé de chacun desdits au moins deux dispositifs de pré-fermentation $pFi_{i:1 \to n, n \geq 2}$, et dirigé et/ou distribué dans ledit dispositif $Fc_j$ de coagulation ou, le cas échéant, chacun desdits mêmes dispositifs $Fc_j$ de coagulation.

27. Dispositif selon la revendication 26, **caractérisé en ce qu'**il comprend plus de deux dispositifs de pré-fermentation $pFi_{i:1 \to n, n \geq 2}$, avec n nombre entier supérieur à 2, chacun pourvu d'au moins une entrée et d'au moins une sortie.

28. Dispositif selon la revendication 26 ou 27, **caractérisé en ce qu'**il comprend au moins deux dispositifs de coagulation $Fc_j$.

29. Utilisation d'au moins deux cultures distinctes de pré-fermentation, l'une de *Lactobacillus delbrueckii* ssp. *bulgaricus* et l'autre de *Streptococcus salivarius* ssp. *Thermophilus,* pour la fabrication d'un produit laitier fermenté choisi parmi le groupe constitué par les yoghourts brassés, les yaourts à boire, les laits fermentés brassés et les laits fermentés à boire, chacune desdites au moins deux cultures étant menée sur un substrat laitier non fermenté ayant subi un traitement thermique au moins équivalent à la pasteurisation,
lesdites au moins deux cultures étant utilisées en fonctionnement continu avec prélèvement continu d'un volume de chacune de ces cultures, ce volume prélevé étant non nul mais inférieur au volume total de la culture de laquelle il est prélevé, et avec ré-alimentation en continu d'un volume sensiblement identique de substrat laitier non-fermenté ayant subi un traitement thermique au moins équivalent à la pasteurisation.

**Claims**

1. Method for the continuous production of a fermented dairy product selected from the group consisting of stirred yogurts, drinkable yogurts, stirred fermented milks and drinkable fermented milks,

comprising the use of at least one *Lactobacillus delbrueckii* subsp. *bulgaricus* strain and at least one *Streptococcus salivarius* subsp. *thermophilus* strain, said continuous method being **characterised in that** it comprises:

- a first step for obtaining at least two separate pre-fermentation cultures,
- one of said at least one *L. bulgaricus* strain, and
- the other of said at least one S. *thermophilus* strain,

in at least two separate pre-fermentation devices pFi (where i is an integer ranging from 1 to n, and n is an integer greater than or equal to 2), with no mixing of said strains with each other in any of said at least two pre-fermentation devices $pFi_{i:1 \to n, n \geq 2}$,

each of said at least two pre-fermentation cultures being brought to a temperature between 40°C and 50°C (inclusive), on a dairy substrate having undergone a heat treatment at least equivalent to pasteurisation, until a pH between 5.6 and 5.9 (inclusive) is obtained in each of said at least two pre-fermentation cultures,

- a second step comprising:

a) continuously operating each of said at least two pre-fermentation devices $pFi_{i:1 \to n, n \geq 2}$ by

- continuously extracting a volume from each of said at least two pre-fermentation cultures obtained in each of said at least two pre-fermentation devices pFi, said extracted volume being not equal to zero but less than the total volume of the culture from which it is extracted, and by
- continuously replenishing each of said at least two pre-fermentation devices pFi with a substantially identical volume of non-fermented dairy substrate,

while adjusting the flows thus created at the inlet and at the outlet of each of said at least two pre-fermentation devices pFi such that the pH of each of said at least two pre-fermentation cultures inside each of said at least two pre-fermentation devices pFi remains between 5.6 and 5.9 (inclusive),

b) routing the outlet flow from each of said at least two pre-fermentation devices pFi, without cooling, to one or a plurality of coagulation devices $Fc_j$ (where j is an integer ranging from 1 to m, and m is an integer greater than or equal to 1),

such that each coagulation device $Fc_j$ receives a flow volume $VpFi_j$ from each of said at least two pre-fermentation devices pFi,

said or each coagulation device $Fc_j$ being or having been further supplied with a volume $VI_j$ of dairy substrate having undergone a heat treatment at least equivalent to pasteurisation,

said or each coagulation device $Fc_j$ thus receiving a volume $VI_j$ of said dairy substrate and further receiving an outlet flow volume $VpFi_j$ from each of said at least two pre-fermentation devices pFi, said volumes being such that the total pre-fermentation device flow volumes $\sum_i VpFi_{j\ i:1 \to n;\ j=1\text{-}m}$ (where i is an integer ranging from 1 to n, and j is an integer selected from 1 to m) received by the same coagulation device $Fc_j$

represents 30 to 70% of the total volume $[VI_j + \sum_i VpFi_{j\ i:1 \to n;\ j=1\text{-}m}]$ received by said coagulation device $Fc_j$,

c) the content of said or each of said coagulation devices $Fc_j$ being subjected to a temperature between 40°C and 50°C (inclusive) so as to enable the development of fermentation until a pH between 4 and 5 is obtained,

d) cutting and stirring the coagulum obtained.

2. Method according to claim 1, **characterised in that** the total pre-fermentation device flow volumes $\sum_i VpFi_{j\ i:1 \to n;\ j=1\text{-}m}$ (where i is an integer ranging from I to n, and j is an integer selected from 1 to m) received by the same coagulation device $Fc_j$ represents 50% of the total volume $[VI_j + \sum_i VpFi_{j\ i:1 \to n;\ j=1\text{-}m}]$ received by said coagulation device $Fc_j$.

3. Method according to any of the above claims, **characterised in that** said non-fermented dairy substrate continuously replenishing each of said at least two pre-fermentation devices pF1 is a sterilised substrate.

4. Method according to any of the above claims, **characterised in that** said first step for obtaining pre-fermentation cultures comprises the culture of a plurality of *Lactobacillus delbrueckii* subsp. *bulgaricus* strains, each being cultured in separate pre-fermentation devices pFi.

5. Method according to any of the above claims, **characterised in that** said first step for obtaining pre-fermentation cultures comprises the culture of a plurality of *Streptococcus salivarius* subsp. *thermophilus* strains, each being cultured in separate pre-fermentation devices pFi.

6. Method according to any of the above claims, **characterised in that** formate is added to the dairy substrate of the *Lactobacillus delbrueckii* subsp. *bulgaricus* strain pre-fermentation culture(s).

7. Method according to any of the above claims, **characterised in that** peptides are added to *Streptococcus salivarius* subsp. *thermophilus* strain pre-fermentation culture(s).

8. Method according to any of the above claims, **characterised in that** the pre-fermentation culture temperature of said at least one *L. bulgaricus* strain is 43°C.

9. Method according to any of the above claims, **characterised in that** the pre-fermentation culture temperature of said at least one S. *thermophilus* strain is 45°C.

10. Method according to any of the above claims, **characterised in that** the volume $VI_j$ of dairy substrate received by said at least one coagulation device $Fc_j$ is a volume of pasteurised dairy substrate.

11. Method according to any of the above claims, **characterised in that** the volume $VI_j$ of dairy substrate received by said at least one coagulation device $Fc_j$ is a volume of non-fermented dairy substrate.

12. Method according to any of claims 1 to 11, **characterised in that** the outlet flows from said at least two pre-fermentation devices pFi are mixed together before being poured into said coagulation device(s) $Fc_j$.

13. Method according to any of claims 1 to 11, **characterised in that** the outlet flows from said at least two pre-fermentation devices pFi are not mixed together before being poured into said coagulation device(s) $Fc_j$.

14. Method according to any of the above claims, **characterised in that** the pH of each of said at least two pre-fermentation cultures contained in each of said at least two pre-fermentation devices pFi is 5.7.

15. Method according to any of the above claims, **characterised in that** the pH of the coagulum obtained in said at least one coagulation device $Fc_j$ is between 4.5 and 4.7.

16. Method according to any of the above claims, **characterised in that** it further comprises the use of at least one strain not belonging to the *L. bulgaricus* subspecies or the S. *thermophilus* species.

17. Method according to claim 16, **characterised in that** said at least one other strain belongs to the *Bifidobacterium* genus, or to a *Lactobacillus* species or subspecies other than *L. bulgaricus.*

18. Method according to claim 16 or 17, **characterised in that** said at least one other strain is cultured on a dairy substrate having a heat treatment at least equivalent to pasteurisation in at least one pre-fermentation device pFk (where k is an integer greater than or equal to 1), said at least one device pFk being separate from said at least two pre-fermentation devices pFi wherein said at least one *L. bulgaricus* strain and said at least one S. *thermophilus* strain are cultured.

19. Method according to claim 18, **characterised in that** said at least one pre-fermentation device pFk operates continuously, by continuously extracting a volume of the culture obtained in said at least one pre-fermentation device pFk, said extracted volume being not equal to zero but less than the total volume of the culture from which it is extracted, and by continuously replenishing said at least one pre-fermentation device pFk with a substantially identical volume of non-fermented dairy substrate, and **in that**
the outlet flow from said at least one pre-fermentation device pFk is routed to the or each coagulation device $Fc_j$ receiving the outlet flow from each of said at least two pre-fermentation devices pFi.

**20.** Method according to claim 16 or 17, **characterised in that** said at least one other strain is added to the or each coagulation device $Fc_j$ receiving the outlet flow from each of said at least two pre-fermentation devices pFi.

**21.** Method according to any of claims 1 to 20, **characterised in that** said stirring is mechanical stirring.

**22.** Method according to any of claims 1 to 20, **characterised in that** said stirring is high-pressure homogeniser stirring.

**23.** Method according to any of the above claims, **characterised** that, after said cutting and stirring step d), the method comprises a step for packaging the coagulum obtained in said or each of said coagulation device(s) $Fc_j$, during which said coagulum(s) is/are dispensed outside said coagulation device(s) $Fc_j$ to one or a plurality of packaging containers.

**24.** Method according to claim 23, **characterised in that**, after said cutting and stirring step d), and before said packaging step, the method comprises a coagulum cooling step.

**25.** Method according to claim 23 or 24, **characterised in that** it comprises the addition of fruit, flavouring(s) and other additive(s) during said packaging step and/or during said cooling step.

**26.** Device suitable for implementing the method according to any of claims 1 to 25, **characterised in that** it comprises:

- at least one coagulation device $Fc_j$ provided with at least one inlet (where j is an integer ranging from 1 to m, and m is an integer greater than or equal to 1),
- at least two pre-fermentation devices pFi (where i is an integer ranging from 1 to n, and n is an integer greater than or equal to 2), each provided with at least one inlet and at least one outlet,
- pre-fermenting device continuous supply means, for continuously supplying each of said at least two pre-fermentation devices $pFi_{i:1\rightarrow n, n\geq 2}$ with dairy substrate,
- pre-fermenting device continuous extraction means, for continuously extracting pre-fermented medium from each of said at least two pre-fermentation devices $pFi_{i:1\rightarrow n, n\geq 2}$,
- guiding means suitable for routing and/or dispensing the pre-fermented medium extracted from each of said at least two pre-fermentation devices $pFi_{i:1\rightarrow n, n\geq 2}$ in said or, if applicable, each of said coagulation devices $Fc_j$, such that each of said coagulation devices $Fc_j$ can thus receive a volume of pre-fermented medium extracted from each of said at least two pre-fermentation devices $pFi_{i:1\rightarrow n, n\geq 2}$, and
- coagulator supply means for supplying said coagulation device(s) $Fc_j$ with dairy substrate,
said device not comprising cooling means for cooling the pre-fermented medium extracted from each of said at least two pre-fermentation devices $pFi_{i:1\rightarrow n, n\geq 2}$, and routed and/or dispensed in said coagulation device $Fc_j$ or, if applicable, each of said coagulation devices $Fc_j$.

**27.** Device according to claim 26, **characterised in that** it comprises more than two pre-fermentation devices $pFi_{i:1\rightarrow n, n\geq 2}$, where n is an integer greater than 2, each provided with at least one inlet and at least one outlet.

**28.** Device according to claim 26 or 27, **characterised in that** it comprises at least two coagulation devices $Fc_j$.

**29.** Use of at least two separate pre-fermentation cultures, one of *Lactobacillus delbrueckii* subsp. *bulgaricus* and the other of *Streptococcus salivarius* subsp. *Thermophilus,* for producing a fermented dairy product selected from the group consisting of stirred yogurts, drinkable yogurts, stirred fermented milks and drinkable fermented milks, each of said at least two cultures being conducted on a non-fermented dairy substrate having undergone a heat treatment at least equivalent to pasteurisation,
said at least two cultures being used in continuous operation with continuous extraction of a volume of each of said cultures, said extracted volume being not equal to zero but less than the total volume of the culture from which it is extracted, and with continuous replenishing of a substantially identical volume of non-fermented dairy substrate having undergone a heat treatment at least equivalent to pasteurisation.

**Patentansprüche**

**1.** Verfahren für die kontinuierliche Herstellung eines fermentierten Milchprodukts, ausgewählt aus der Gruppe, bestehend aus gerührten Joghurts, Trinkjoghurts, gerührter fermentierter Milch und trinkbarer fermentierter Milch, umfassend das Bereitstellen mindestens eines Stamms von *Lactobacillus delbrueckii* ssp. *bulgaricus* und mindestens eines Stamms von *Streptococcus salivarius* ssp. *thermophilus,* wobei das kontinuierliche Verfahren **dadurch gekennzeichnet ist, dass** es umfasst:

- einen ersten Schritt des Erhalts von mindestens zwei verschiedenen Vorfermentationskulturen,

  - wobei die eine davon mindestens ein Stamm von *L. bulgaricus,* und
  - die andere davon mindestens ein Stamm von S. *thermophilus* ist,

in mindestens zwei verschiedenen Vorfermentationsgeräten pFi (wobei i eine ganze Zahl von 1 bis n und n eine ganze Zahl größer als oder gleich 2 ist), ohne Mischen des einen der Stämme mit dem anderen in einem der mindestens zwei Vorfermentationsgeräte $pFi_{i:1 \rightarrow n, n \geq 2}$

wobei jede der mindestens zwei Vorfermentationskulturen bei einer Temperatur zwischen 40°C und 50°C (Grenzen eingeschlossen) geführt wird, auf einem Molkereisubstrat, das einer thermischen Behandlung, die mindestens äquivalent zur Pasteurisierung ist, unterzogen wurde, bis zum Erhalt eines pH-Werts zwischen 5,6 und 5,9 (Grenzen eingeschlossen) in jeder der mindestens zwei Vorfermentationskulturen,

- einen zweiten Schritt, umfassend die Tatsache, dass:

  a) jedes der mindestens zwei Vorfermentationsgeräte $pFi_{i:1 \rightarrow n, n \geq 2}$ kontinuierlich betrieben wird, indem

    - kontinuierlich ein Volumen von jeder der mindestens zwei Vorfermentationskulturen, die in jedem der mindestens zwei Vorfermentationsgeräte pFi erhalten wurde, entnommen wird, wobei das entnommene Volumen nicht null, aber kleiner als das Gesamtvolumen der Kultur, aus der es entnommen wurde, ist, und indem
    - kontinuierlich jedem der mindestens zwei Vorfermentationsgeräte pFi wieder ein etwa identisches Volumen an nicht fermentiertem Molkereisubstrat zugeführt wird,

    wobei die Ströme, die auf diese Weise am Einlass und am Auslass jedes der mindestens zwei Vorfermentationsgeräte pFi geschaffen werden, so eingestellt werden, dass der pH-Wert jeder der mindestens zwei Vorfermentationskulturen im Inneren von jedem der mindestens zwei Vorfermentationsgeräte pFi zwischen 5,6 und 5,9 (Grenzen eingeschlossen) bleibt,

  b) der Auslassstrom jedes der mindestens zwei Vorfermentationsgeräte pFi, ohne ihn einer Kühlung zu unterziehen, zu einem oder mehreren Koagulationsgerät(en) $Fc_j$ (wobei j eine ganze Zahl von 1 bis m und m eine ganze Zahl größer als oder gleich 1 ist) geleitet wird,

  so dass jedes Koagulationsgerät $Fc_j$ ein Stromvolumen $VpFi_j$ von jedem der mindestens zwei Vorfermentationsgeräte pFi erhält,

  wobei dem oder jedem Koagulationsgerät $Fc_j$ außerdem zusätzlich ein Volumen $Vl_j$ an Molkereisubstrat, das einer thermischen Behandlung, die mindestens äquivalent zur Pasteurisierung ist, unterzogen wurde, zugeführt wird oder wurde,

  wobei das oder jedes Koagulationsgerät $Fc_j$ auf diese Weise einerseits ein Volumen $Vl_j$ des Molkereisubstrats erhält und andererseits ein Volumen $VpFi_j$ des Auslassstroms von jeder der mindestens zwei Vorfermentationsgeräte pFi erhält, wobei die Volumen so sind, dass

  das Gesamtströmungsvolumen des Stroms der Vorfermentationsgeräte

$$\sum_i VpFi_{j\ i:1 \rightarrow n\ ;\ j=1 \cdot m}$$

  (wobei i eine ganze Zahl von 1 bis n und j eine ganze Zahl, ausgewählt aus 1 bis m, ist), das von einem selben Koagulationsgerät $Fc_j$ erhalten wird, 30 bis 70% des Gesamtvolumens

$$\left[ Vl_j + \sum_i VpFi_{j\ i:1 \rightarrow n\ ;\ j=1 \cdot m} \right]$$

  das von dem selben Koagulationsgerät $Fc_j$ erhalten wird, darstellt,

  c) dann der Inhalt des oder jedes Koagulationsgeräts $Fc_j$ einer Temperatur zwischen 40°C und 50°C (Grenzen eingeschlossen) unterzogen wird, um die Entwicklung einer Fermentation bis zum Erhalt eines pH-Werts zwischen 4 und 5 zu gestatten,
d) mit dem Schneiden und Rühren des erhaltenen Koagulums fortgefahren wird.

**2.** Verfahren gemäß Anspruch 1, **dadurch gekennzeichnet, dass** das Gesamtströmungsvolumen der Vorfermentationsgeräte

$$\sum_{i} VpFi_{j} \quad i:1\rightarrow n \; ; \; j=1-m$$

(wobei i eine ganze Zahl von 1 bis n und j eine ganze Zahl, ausgewählt aus 1 bis m, ist), das von einem selben Koagulationsgerät $Fc_j$ erhalten wurde, 50% des Gesamtvolumens

$$\left[ Vl_j + \sum_{i} VpFi_{j} \; i:1\rightarrow n \; ; \; j=1-m \right]$$

das von dem selben Koagulationsgerät Fcj erhalten wird, darstellt.

**3.** Verfahren gemäß einem der vorhergehenden Ansprüche, **dadurch gekennzeichnet, dass** das nicht fermentierte Molkereisubstrat, das kontinuierlich jedem der mindestens zwei Vorfermentationsgeräte pFi wieder zugeführt wird, ein sterilisiertes Substrat ist.

**4.** Verfahren gemäß einem der vorhergehenden Ansprüche, **dadurch gekennzeichnet, dass** der erste Schritt des Erhalts der Vorfermentationskulturen die Kultivierung von mehreren Stämmen von *Lactobacillus delbrueckii* ssp. *bulgaricus* umfasst, wobei jeder in verschiedenen Vorfermentationsgeräten pFi kultiviert wird.

**5.** Verfahren gemäß einem der vorhergehenden Ansprüche, **dadurch gekennzeichnet, dass** der erste Schritt des Erhalts der Vorfermentationskulturen die Kultivierung von mehreren Stämmen von *Streptococcus salivarius* ssp. *thermophilus* umfasst, wobei jeder in verschiedenen Vorfermentationsgeräten pFi kultiviert wird.

**6.** Verfahren gemäß einem der vorhergehenden Ansprüche, **dadurch gekennzeichnet, dass** man dem Molkereisubstrat der Vorfermentationskultur oder der Vorfermentationskulturen des Stamms/derStämme von *Lactobacillus delbrueckii* ssp. *bulgaricus* Formiat zufügt.

**7.** Verfahren gemäß einem der vorhergehenden Ansprüche, **dadurch gekennzeichnet, dass** man der Vorfermentationskultur oder der Vorfermentationskulturen des Stamms/derStämme *Streptococcus salivarius* ssp. *thermophilus* Peptide zufügt.

**8.** Verfahren gemäß einem der vorhergehenden Ansprüche, **dadurch gekennzeichnet, dass** die Temperatur der Vorfermentationskultur des mindestens einen Stamms von *L. bulgaricus* 43 °C ist.

**9.** Verfahren gemäß einem der vorhergehenden Ansprüche, **dadurch gekennzeichnet, dass** die Temperatur der Vorfermentationskultur des mindestens einen Stamms von S. *thermophilus* 45 °C ist.

**10.** Verfahren gemäß einem der vorhergehenden Ansprüche, **dadurch gekennzeichnet, dass** das Volumen $Vl_j$ des Molkereisubstrats, das von dem mindestens einen Koagulationsgerät $Fc_j$ erhalten wird, ein Volumen an pasteurisiertem Molkereisubstrat ist.

**11.** Verfahren gemäß einem der vorhergehenden Ansprüche, **dadurch gekennzeichnet, dass** das Volumen $Vl_j$ des Molkereisubstrats, das von dem mindestens einen Koagulationsgerät $Fc_j$ erhalten wird, ein Volumen an nicht fermentiertem Molkereisubstrat ist.

**12.** Verfahren gemäß einem der Ansprüche 1 bis 11, **dadurch gekennzeichnet, dass** die Auslassströme der mindestens zwei Vorfermentationsgeräte pFi miteinander gemischt werden, bevor sie in das/die Koagulationsgerät(e) $Fc_j$

eingefüllt werden.

**13.** Verfahren gemäß einem der Ansprüche 1 bis 11, **dadurch gekennzeichnet, dass** die Auslassströme der mindestens zwei Vorfermentationsgeräte pFi nicht miteinander gemischt werden, bevor sie in das/die Koagulationsgerät (e) $Fc_j$ eingefüllt werden.

**14.** Verfahren gemäß einem der vorhergehenden Ansprüche, **dadurch gekennzeichnet, dass** der pH-Wert jeder der mindestens zwei Vorfermentationskulturen, die in jedem der mindestens zwei Vorfermentationsgeräte pFi vorhanden sind, 5,7 ist.

**15.** Verfahren gemäß einem der vorhergehenden Ansprüche, **dadurch gekennzeichnet, dass** der pH-Wert des Koagulums, das in dem mindestens einen Koagulationsgerät $Fc_j$ erhalten wird, zwischen 4,5 und 4,7 ist.

**16.** Verfahren gemäß einem der vorhergehenden Ansprüche, **dadurch gekennzeichnet, dass** es außerdem das Bereitstellen mindestens eines weiteren Stamms, der weder der Subspezies *L. bulgaricus* noch der Spezies S. *thermophilus* angehört, umfasst.

**17.** Verfahren gemäß Anspruch 16, **dadurch gekennzeichnet, dass** der mindestens eine weitere Stamm der Gattung *Bifidobacterium* oder einer anderen Spezies oder Subspezies von *Lactobacillus* als *L. bulgaricus* angehört.

**18.** Verfahren gemäß Anspruch 16 oder 17, **dadurch gekennzeichnet, dass** der mindestens eine weitere Stamm auf einem Molkereisubstrat, das einer thermischen Behandlung, die mindestens äquivalent zur Pasteurisierung ist, unterzogen wurde, in mindestens einem Vorfermentationsgerät pFk (wobei k eine ganze Zahl größer als oder gleich 1 ist) kultiviert wird, wobei das mindestens eine Gerät pFk verschieden von den mindestens zwei Vorfermentationsgeräten pFi ist, in denen der mindestens eine Stamm von *L. bulgaricus* und der mindestens eine Stamm von S. *thermophilus* kultiviert werden.

**19.** Verfahren gemäß Anspruch 18, **dadurch gekennzeichnet, dass** das mindestens eine Vorfermentationsgerät pFk kontinuierlich betrieben wird, durch kontinuierliche Entnahme eines Volumens der in dem mindestens einen Vorfermentationsgerät pFk erhaltenen Kultur, wobei das entnommene Volumen nicht null, aber kleiner als das Gesamtvolumen der Kultur, aus der es entnommen wurde, ist, und durch kontinuierliche neuerliche Zufuhr eines etwa identischen Volumens an nicht fermentiertem Molkereisubstrat, an das mindestens eine Vorfermentationsgerät pFk, und **dadurch**, dass der Auslassstrom des mindestens einen Vorfermentationsgeräts pFk zu dem oder jedem Koagulationsgerät $Fc_j$, das/die den Auslassstrom jedes der mindestens zwei Vorfermentationsgeräte pFi erhält, geleitet wird.

**20.** Verfahren gemäß Anspruch 16 oder 17, **dadurch gekennzeichnet, dass** der mindestens eine weitere Stamm dem oder jedem Koagulationsgerät $Fc_j$, das den Auslassstrom jedes der mindestens zwei Vorfermentationsgeräte pFi erhält, zugefügt wird.

**21.** Verfahren gemäß einem der Ansprüche 1 bis 20, **dadurch gekennzeichnet, dass** das Rühren ein mechanisches Rühren ist.

**22.** Verfahren gemäß einem der Ansprüche 1 bis 20, **dadurch gekennzeichnet, dass** das Rühren ein Rühren mittels eines Homogenisators unter Druck ist.

**23.** Verfahren gemäß einem der vorhergehenden Ansprüche, **dadurch gekennzeichnet, dass** das Verfahren nach dem Schritt d) des Schneidens und Rührens einen Schritt der Aufbereitung des Koagulums, das in dem oder jedem Koagulationsgerät $Fc_j$ erhalten wird, umfasst, währenddessen das Koagulum/die Koagulate außerhalb des Koagulationsgeräts/der Koagulationsgeräte $Fc_j$ zu einem Aufbereitungsbehälter oder mehreren Aufbereitungsbehältern verteilt wird.

**24.** Verfahren gemäß Anspruch 23, **dadurch gekennzeichnet, dass** das Verfahren nach dem Schritt d) des Schneidens und Rührens und vor dem Schritt der Aufbereitung einen Schritt des Kühlens des Koagulums umfasst.

**25.** Verfahren gemäß Anspruch 23 oder 24, **dadurch gekennzeichnet, dass** es die Zugabe von Frucht/Früchten, Aroma/Aromen oder (einem) anderen Zusatzstoff(en) bei dem Schritt der Aufbereitung und/oder bei dem Schritt des Kühlens umfasst.

26. Gerät, das zur Durchführung des Verfahrens gemäß einem der Ansprüche 1 bis 25 geeignet ist, **dadurch gekennzeichnet, dass** es umfasst:

- mindestens ein Koagulationsgerät $Fc_j$, das mit mindestens einem Einlass (wobei j eine ganze Zahl von 1 bis m und m eine ganze Zahl größer als oder gleich 1 ist) ausgestattet ist,
- mindestens zwei Vorfermentationsgeräte pFi (wobei i eine ganze Zahl von 1 bis n und n eine ganze Zahl größer als oder gleich 2 ist), die jeweils mit mindestens einem Einlass und mit mindestens einem Auslass ausgestattet sind,
- Mittel zur kontinuierlichen Zufuhr von Vorferment, um jedem der mindestens zwei Vorfermentationsgeräte $pFi_{i:1 \to n,\, n \geq 2}$ kontinuierlich Molkereisubstrat zuzuführen,
- Mittel zur kontinuierlichen Entnahme von Vorferment, um jedem der mindestens zwei Vorfermentationsgeräte $pFi_{i:1 \to n,\, n \geq 2}$ kontinuierlich vorfermentiertes Medium zu entnehmen,
- Führungsmittel, die dazu geeignet sind, das jedem der mindestens zwei Vorfermentationsgeräte $pFi_{i:1 \to n,\, n \geq 2}$ entnommene vorfermentierte Medium in das oder gegebenenfalls jedes Koagulationsgerät $Fc_j$ zu leiten und/oder zu verteilen, so dass auf diese Weise jedes der Koagulationsgeräte $Fc_j$ ein Volumen des vorfermentierten Mediums, das jedem der mindestens zwei Vorfermentationsgeräte $pFi_{i:1 \to n,\, n \geq 2}$ entnommen wurde, erhalten kann und
- Mittel zur Zufuhr von Koagulationsmittel, die es gestatten, dem/den gleichen Koagulationsgerät(en) $Fc_j$ Molkereisubstrat zuzuführen,
wobei das Gerät keine Mittel für die Kühlung, die die Kühlung des vorfermentierten Mediums, das jedem der mindestens zwei Vorfermentationsgeräte $pFi_{i:1 \to n,\, n \geq 2}$ entnommen wurde und das in das oder gegebenenfalls jedes gleiche Koagulationsgerät $Fc_j$ geleitet und/oder verteilt wurde, gestatten, umfasst.

27. Gerät gemäß Anspruch 26, **dadurch gekennzeichnet, dass** es mehr als zwei Vorfermentationsgeräte $pFi_{i:1 \to n,\, n \geq 2}$, wobei n eine ganze Zahl größer als 2 ist, umfasst, wobei jedes mit mindestens einem Einlass und mit mindestens einem Auslass ausgestattet ist.

28. Gerät gemäß Anspruch 26 oder 27, **dadurch gekennzeichnet, dass** es mindestens zwei Koagulationsgeräte $Fc_j$ umfasst.

29. Verwendung von mindestens zwei verschiedenen Vorfermentationskulturen, wobei die eine von *Lactobacillus delbrueckii* ssp. *bulgaricus* und die andere von *Streptococcus salivarius* ssp. *thermophilus* ist, zur Herstellung eines fermentierten Milchprodukts, ausgewählt aus der Gruppe, bestehend aus gerührten Joghurts, Trinkjoghurts, gerührter fermentierter Milch und trinkbarer fermentierter Milch, wobei jede der mindestens zwei Kulturen auf einem nicht fermentierten Molkereisubstrat, das einer thermischen Behandlung, die mindestens äquivalent zur Pasteurisierung ist, unterzogen wurde, geführt wird,
wobei die mindestens zwei Kulturen in kontinuierlichem Betrieb mit der kontinuierlichen Entnahme eines Volumens von jeder der Kulturen, wobei das entnommene Volumen nicht null, aber kleiner als das Gesamtvolumen der Kultur, aus der es entnommen wurde, ist, und mit der kontinuierlichen neuerlichen Zufuhr eines etwa identischen Volumens an nicht fermentiertem Molkereisubstrat, das einer thermischen Behandlung, die mindestens äquivalent zur Pasteurisierung ist, unterzogen wurde, verwendet werden.

Substrat laitier pasteurisé,
de préférence stérilisé

pF1 :
Strepto
pH 5,6-5,8

pF2
Lacto
pH 5,6-5,8

Substrat laitier pasteurisé

Fc          Fc          Fc        Fc

Dispositifs de coagulation

**FIGURE 1**

FIGURE 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 881203
- US 3946657 A
- US 5962046 A

**Littérature non-brevet citée dans la description**

- **Kjeldahl.** Science du lait - Principes des techniques laitières. 1984, 195-196